# EUROPEAN PATENT APPLICATION

(11) **EP 4 697 276 A1**
(43) Date of publication of application: **18.02.2026**
(21) Application number: 24800160.4
(22) Date of filing: 27.03.2024
(51) Int. Cl.: G06T 13/40, G06T 13/20, G06F 3/16, G10L 15/183, G10L 25/24, G10L 15/02, G06T 17/20, G06F 3/01, G06V 40/16

(54) **ELECTRONIC DEVICE AND METHOD FOR DISPLAYING AVATAR IN VIRTUAL ENVIRONMENT**

(30) Priority: 03.05.2023 KR 20230058017; 13.06.2023 KR 20230075398
(71) Applicant: Samsung Electronics Co., Ltd., Suwon-si, Gyeonggi-do 16677 (KR)
(72) Inventor: PARK, Jongpil, Suwon-si Gyeonggi-do 16677 (KR); YOON, Joona, Suwon-si Gyeonggi-do 16677 (KR); PARK, Jinju, Suwon-si Gyeonggi-do 16677 (KR); YOON, Jihyeok, Suwon-si Gyeonggi-do 16677 (KR)
(74) Representative: HGF
(86) International application number: PCT/KR2024/003888
(87) International publication number: WO 2024/228472

(57) **Abstract**

This electronic device may comprise a display, a memory for storing instructions, and at least one processor. The instructions, when executed individually or collectively by the at least one processor, may cause the electronic device to: with regard to feature value identification of voice data, identify a first processing speed of each of a plurality of processing circuits for processing the voice data; with regard to mouth shape identification of the voice data, identify a second processing speed of each of the plurality of processing circuits; obtain voice information from the outside of the electronic device while displaying an avatar; obtain a plurality of feature values of the voice information by using a first processing circuit identified on the basis of the first processing speed; obtain information for generating mouth shapes on the basis of the plurality of feature values, by using a second processing circuit identified on the basis of the second processing speed; and display, through the display, the avatar including the mouth shapes generated on the basis of the information.

## Description

### [Technical Field]

The following descriptions relate to an electronic device and a method for displaying an avatar in a virtual environment.

### [Background Art]

In order to provide an enhanced user experience, an electronic device that provides an augmented reality (AR) service that displays information generated by a computer in conjunction with an external object in the real-world is being developed. The augmented reality may be referred to as a virtual environment. The electronic device may include a wearable device that may be worn by a user. For example, the electronic device may include user equipment, AR glasses, and/or a head-mounted device (HMD).

### [Disclosure]

### [Technical Solution]

An electronic device may include a display. The electronic device may include at least one processor. The at least one processor may be configured to identify, with respect to feature value identification of voice data, first processing speed of each of a plurality of processing circuits for processing the voice data. The at least one processor may be configured to identify, with respect to mouth shape identification of the voice data in conjunction with the feature value, second processing speed of each of the plurality of processing circuits. The at least one processor may be configured to obtain, in a state of displaying an avatar, voice information from outside the electronic device. The at least one processor may be configured to obtain, using a first processing circuit identified based on the first processing speed from among the plurality of processing circuits, a plurality of feature values of the voice information. The at least one processor may be configured to obtain, using a second processing circuit identified based on the second processing speed from among the plurality of processing circuits, information for generating a mouth shape, based on the plurality of feature values. The at least one processor may be configured to display, via the display, the avatar including the mouth shape generated based on the information. One or more programs including instructions causing an avatar to be displayed on the display within a space may be stored.

As described above, a method executed by an electronic device may include identifying, with respect to feature value identification of voice data, first processing speed of each of a plurality of processing circuits for processing the voice data. The method may include identifying, with respect to mouth shape identification of the voice data in conjunction with the feature value, second processing speed of each of the plurality of processing circuits. The method may include obtaining, in a state of displaying an avatar, voice information from outside the electronic device. The method may include obtaining, using a first processing circuit identified based on the first processing speed from among the plurality of processing circuits, a plurality of feature values of the voice information. The method may include obtaining, using a second processing circuit identified based on the second processing speed from among the plurality of processing circuits, information for generating a mouth shape, based on the plurality of feature values. The method may include displaying, via a display of the electronic device, the avatar including the mouth shape generated based on the information.

As described above, a non-transitory computer readable storage medium may store one or more programs including instructions which, when executed by at least one processor of an electronic device 101 with a display, cause the electronic device to identify, with respect to feature value identification of voice data, first processing speed of each of a plurality of processing circuits for processing the voice data. The non-transitory computer readable storage medium may store the one or more programs including the instructions which, when executed by the at least one processor, cause the electronic device to identify, with respect to mouth shape identification of the voice data in conjunction with the feature value, second processing speed of each of the plurality of processing circuits. The non-transitory computer readable storage medium may store the one or more programs including the instructions which, when executed by the at least one processor, cause the electronic device to obtain, in a state of displaying an avatar, voice information from outside the electronic device. The non-transitory computer readable storage medium may store the one or more programs including the instructions which, when executed by the at least one processor, cause the electronic device to obtain, using a first processing circuit identified based on the first processing speed from among the plurality of processing circuits, a plurality of feature values of the voice information. The non-transitory computer readable storage medium may store the one or more programs including the instructions which, when executed by the at least one processor, cause the electronic device to obtain, using a second processing circuit identified based on the second processing speed from among the plurality of processing circuits, information for generating a mouth shape, based on the plurality of feature values. The non-transitory computer readable storage medium may store the one or more programs including the instructions which, when executed by the at least one processor, cause the electronic device to display, via the display, the avatar including the mouth shape generated based on the information.

### [Description of the Drawings]

FIG. 1 is a block diagram of an electronic device in a network environment according to various embodiments.
FIG. 2A illustrates an example of a perspective view of a wearable device according to various embodiments.
FIG. 2B illustrates an example of one or more hardware disposed in a wearable device according to various embodiments.
FIGS. 3A and 3B illustrate an example of an appearance of a wearable device according to various embodiments.
FIG. 4 illustrates an example of a method of identifying a mouth shape of an avatar corresponding to a user according to various embodiments.
FIG. 5 illustrates an exemplary block diagram of an electronic device according to various embodiments.
FIGS. 6A and 6B illustrate an example of a flowchart of a method of identifying a mouth shape of an avatar in a virtual environment according to various embodiments.
FIG. 7 illustrates an example of a delay time between a timing of obtaining voice information and a timing for playing the voice information according to various embodiments.
FIG. 8A illustrates an example of a band pass filter (BPF) for removing noise of voice information according to various embodiments.
FIGS. 8B and 8C illustrate examples of a method of enhancing voice from voice information according to various embodiments.
FIG. 8D illustrates an example of normalizing volume of voice of voice information according to various embodiments.
FIG. 9 illustrates an example of a block diagram for obtaining a feature value of voice information according to various embodiments.
FIG. 10 illustrates an example of a method of obtaining information for generating a mouth shape based on voice information according to various embodiments.
FIG. 11 illustrates examples of a method of generating an animation for an avatar including a mouth shape according to various embodiments.
FIGS. 12A to 12C illustrate examples of a method of playing an animation for an avatar including a mouth shape according to various embodiments.
FIG. 13 illustrates an example of a flowchart of a method of applying a specified mouth shape to an avatar including a mouth shape in a closed state according to various embodiments.
FIG. 14 illustrates an example of a flowchart of a method of identifying a mouth shape of an avatar based on performance of a plurality of processing circuits according to various embodiments.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B).

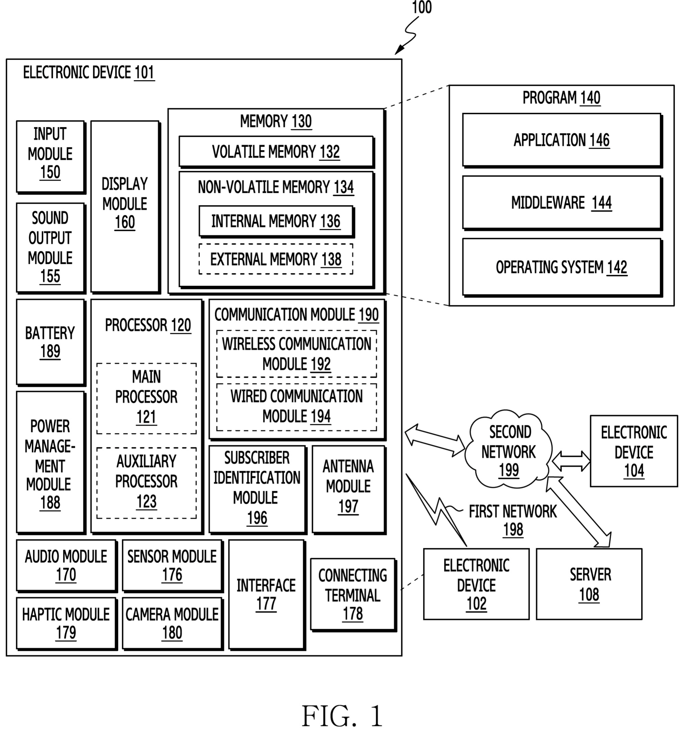

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

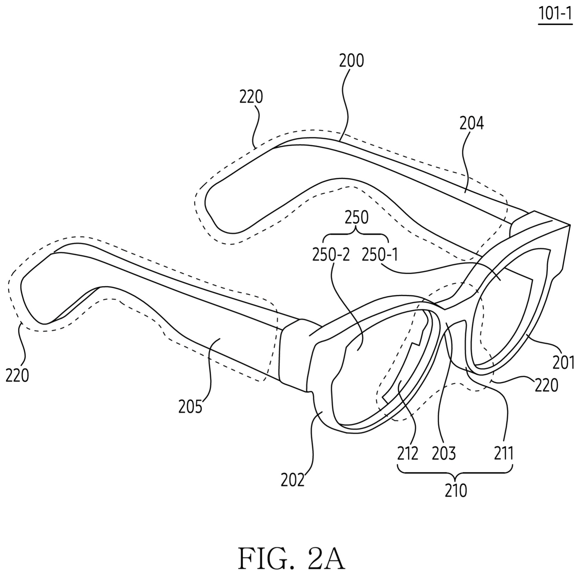

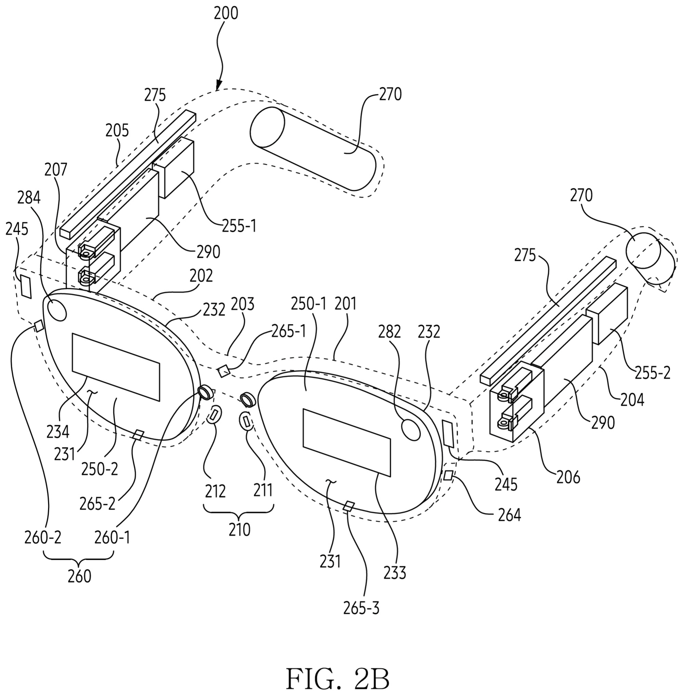

FIG. 2A illustrates an example of a perspective view of a wearable device according to various embodiments. FIG. 2B illustrates an example of one or more hardware disposed in a wearable device according to various embodiments.

The wearable device 101-1 according to an embodiment may have a shape of glasses that are wearable on a user's body part (e.g., head). The wearable device 101-1 of FIGS. 2A and 2B may be an example of the electronic device 101 of FIG. 1. The wearable device 101-1 may include a head mounted display (HMD). For example, a housing of the wearable device 101-1 may include a flexible material such as a rubber and/or silicone having a shape in close contact with a part of the user's head (e.g., a part of the face surrounding two eyes). For example, a housing of a wearable device 101-1 may include one or more straps able to be twined around a head of a user and/or one or more temples attachable to ears of the head.

Referring to FIG. 2A, the wearable device 101-1 according to an embodiment may include at least one display 250 and a frame 200 supporting the at least one display 250.

According to an embodiment, the wearable device 101-1 may be wearable on a portion of the user's body. The wearable device 101-1 may provide augmented reality (AR), virtual reality (VR), or mixed reality (MR) combining the augmented reality and the virtual reality to a user wearing the wearable device 101-1. For example, the wearable device 101-1 may display a virtual reality image provided from at least one optical device 282 and 284 of FIG. 2B on at least one display 250, in response to a user's preset gesture obtained through a motion recognition camera 260-2 and 264 of FIG. 2B. For example, the display 250 may include at least a portion of the display module 160 of FIG. 1.

According to an embodiment, the at least one display 250 may provide visual information to a user. For example, the at least one display 250 may include a transparent or translucent lens. The at least one display 250 may include a first display 250-1 and/or a second display 250-2 spaced apart from the first display 250-1. For example, the first display 250-1 and the second display 250-2 may be disposed at positions corresponding to the user's left and right eyes, respectively.

Referring to FIG. 2B, the at least one display 250 may provide visual information transmitted through a lens included in the at least one display 250 from ambient light to a user and other visual information distinguished from the visual information2. The lens may be formed based on at least one of a fresnel lens, a pancake lens, or a multi-channel lens. For example, the at least one display 250 may include a first surface 231 and a second surface 232 opposite to the first surface 231. A display area may be formed on the second surface 232 of at least one display 250. When the user wears the wearable device 101-1, ambient light may be transmitted to the user by being incident on the first surface 231 and being penetrated through the second surface 232. For another example, the at least one display 250 may display an augmented reality image in which a virtual reality image provided by the at least one optical device 282 and 284 is combined with a reality screen transmitted through ambient light, on a display area formed on the second surface 232.

In an embodiment, the at least one display 250 may include at least one waveguide 233 and 234 that transmits light transmitted from the at least one optical device 282 and 284 by diffracting to the user. The at least one waveguide 233 and 234 may be formed based on at least one of glass, plastic, or polymer. A nano pattern may be formed on at least a portion of the outside or inside of the at least one waveguide 233 and 234. The nano pattern may be formed based on a grating structure having a polygonal or curved shape. Light incident to an end of the at least one waveguide 233 and 234 may be propagated to another end of the at least one waveguide 233 and 234 by the nano pattern. The at least one waveguide 233 and 234 may include at least one of at least one diffraction element (e.g., a diffractive optical element (DOE), a holographic optical element (HOE)), and a reflection element (e.g., a reflection mirror). For example, the at least one waveguide 233 and 234 may be disposed in the wearable device 101-1 to guide a screen displayed by the at least one display 250 to the user's eyes. For example, the screen may be transmitted to the user's eyes based on total internal reflection (TIR) generated in the at least one waveguide 233 and 234.

The wearable device 101-1 may analyze an object included in a real image collected through a photographing camera 245, combine with a virtual object corresponding to an object that becomes a subject of augmented reality provision among the analyzed object, and display on the at least one display 250. The virtual object may include at least one of text and images for various information associated with the object included in the real image. The wearable device 101-1 may analyze the object based on a multi-camera such as a stereo camera. For the object analysis, the wearable device 101-1 may execute simultaneous localization and mapping (SLAM) by using the multi-camera, inertial measurement units (IMU) (or IMU sensor) and/or time-of-flight (ToF). The user wearing the wearable device 101-1 may watch an image displayed on the at least one display 250.

According to an embodiment, a frame 200 may be configured with a physical structure in which the wearable device 101-1 may be worn on the user's body. According to an embodiment, the frame 200 may be configured so that when the user wears the wearable device 101-1, the first display 250-1 and the second display 250-2 may be positioned corresponding to the user's left and right eyes. The frame 200 may support the at least one display 250. For example, the frame 200 may support the first display 250-1 and the second display 250-2 to be positioned at positions corresponding to the user's left and right eyes.

Referring to FIG. 2A, according to an embodiment, the frame 200 may include an area 220 at least partially in contact with the portion of the user's body in case that the user wears the wearable device 101-1. For example, the area 220 of the frame 200 in contact with the portion of the user's body may include an area in contact with a portion of the user's nose, a portion of the user's ear, and a portion of the side of the user's face that the wearable device 101-1 contacts. According to an embodiment, the frame 200 may include a nose pad 210 that is contacted on the portion of the user's body. When the wearable device 101-1 is worn by the user, the nose pad 210 may be contacted on the portion of the user's nose. The frame 200 may include a first temple 204 and a second temple 205, which are contacted on another portion of the user's body that is distinct from the portion of the user's body.

For example, the frame 200 may include a first rim 201 surrounding at least a portion of the first display 250-1, a second rim 202 surrounding at least a portion of the second display 250-2, a bridge 203 disposed between the first rim 201 and the second rim 202, a first pad 211 disposed along a portion of the edge of the first rim 201 from one end of the bridge 203, a second pad 212 disposed along a portion of the edge of the second rim 202 from the other end of the bridge 203, the first temple 204 extending from the first rim 201 and fixed to a portion of the wearer's ear, and the second temple 205 extending from the second rim 202 and fixed to a portion of the ear opposite to the ear. The first pad 211 and the second pad 212 may be in contact with the portion of the user's nose, and the first temple 204 and the second temple 205 may be in contact with a portion of the user's face and the portion of the user's ear. The temples 204 and 205 may be rotatably connected to the rim through hinge units 206 and 207 of FIG. 2B. The first temple 204 may be rotatably connected with respect to the first rim 201 through the first hinge unit 206 disposed between the first rim 201 and the first temple 204. The second temple 205 may be rotatably connected with respect to the second rim 202 through the second hinge unit 207 disposed between the second rim 202 and the second temple 205. According to an embodiment, the wearable device 101-1 may identify an external object (e.g., a user's fingertip) touching the frame 200 and/or a gesture performed by the external object by using a touch sensor, a grip sensor, and/or a proximity sensor formed on at least a portion of the surface of the frame 200.

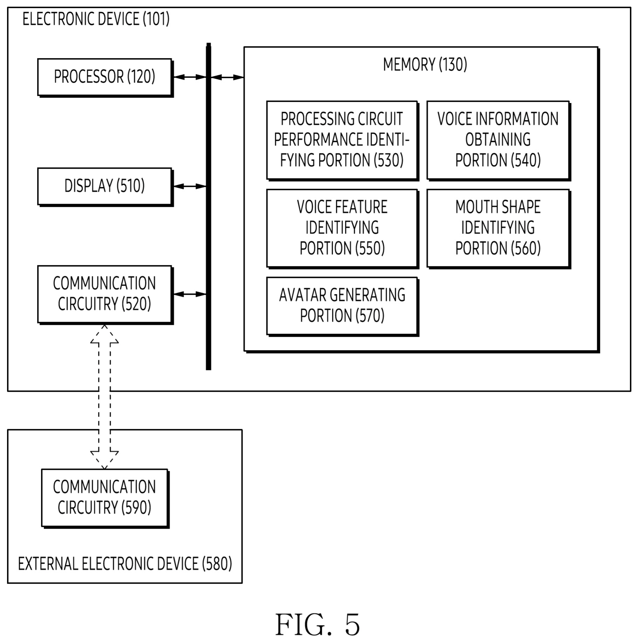

According to an embodiment, the wearable device 101-1 may include hardware (e.g., hardware to be described later based on the block diagram of FIG. 5) that performs various functions. For example, the hardware may include a battery module 270, an antenna module 275, the at least one optical device 282 and 284, speakers (e.g., speakers 255-1 and 255-2), a microphone (e.g., microphones 265-1, 265-2, and 265-3), a light emitting module (not illustrated), and/or a printed circuit board (PCB) 290 (e.g., printed circuit board). Various hardware may be disposed in the frame 200.

According to an embodiment, the microphone (e.g., the microphones 265-1, 265-2, and 265-3) of the wearable device 101-1 may obtain a sound signal, by being disposed on at least a portion of the frame 200. The first microphone 265-1 disposed on the bridge 203, the second microphone 265-2 disposed on the second rim 202, and the third microphone 265-3 disposed on the first rim 201 are illustrated in FIG. 2B, but the number and disposition of the microphone 265 are not limited to an embodiment of FIG. 2B. In case that the number of the microphone 265 included in the wearable device 101-1 is two or more, the wearable device 101-1 may identify a direction of the sound signal by using a plurality of microphones disposed on different portions of the frame 200.

According to an embodiment, the at least one optical device 282 and 284 may project a virtual object on the at least one display 250 in order to provide various image information to the user. For example, the at least one optical device 282 and 284 may be a projector. The at least one optical device 282 and 284 may be disposed adjacent to the at least one display 250 or may be included in the at least one display 250 as a portion of the at least one display 250. According to an embodiment, the wearable device 101-1 may include a first optical device 282 corresponding to the first display 250-1, and a second optical device 284 corresponding to the second display 250-2. For example, the at least one optical device 282 and 284 may include the first optical device 282 disposed at a periphery of the first display 250-1 and the second optical device 284 disposed at a periphery of the second display 250-2. The first optical device 282 may transmit light to the first waveguide 233 disposed on the first display 250-1, and the second optical device 284 may transmit light to the second waveguide 234 disposed on the second display 250-2.

In an embodiment, a camera 260 may include the photographing camera 245, an eye tracking camera (ET camera) 260-1, and/or the motion recognition camera 260-2. The photographing camera 245, the eye tracking camera 260-1, and the motion recognition camera 260-2 and 264 may be disposed at different positions on the frame 200 and may perform different functions. The eye tracking camera 260-1 may output data indicating a gaze of the user wearing the wearable device 101-1. For example, the wearable device 101-1 may detect the gaze from an image including the user's pupil obtained through the eye tracking camera 260-1. An example in which the eye tracking camera 260-1 is disposed toward the user's right eye is illustrated in FIG. 2B, but the embodiment is not limited thereto, and the eye tracking camera 260-1 may be disposed alone toward the user's left eye or may be disposed toward two eyes.

In an embodiment, the photographing camera 245 may photograph a real image or background to be matched with a virtual image in order to implement the augmented reality or mixed reality content. The photographing camera 245 may photograph an image of a specific object existing at a position viewed by the user and may provide the image to the at least one display 250. The at least one display 250 may display one image in which a virtual image provided through the at least one optical device 282 and 284 is overlapped with information on the real image or background including an image of the specific object obtained by using the photographing camera 245. In an embodiment, the photographing camera 245 may be disposed on the bridge 203 disposed between the first rim 201 and the second rim 202.

The eye tracking camera 260-1 may implement a more realistic augmented reality by matching the user's gaze with the visual information provided on the at least one display 250, by tracking the gaze of the user wearing the wearable device 101-1. For example, when the user looks at the front, the wearable device 101-1 may naturally display environment information associated with the user's front on the at least one display 250 at a position where the user is positioned. The eye tracking camera 260-1 may be configured to capture an image of the user's pupil in order to determine the user's gaze. For example, the eye tracking camera 260-1 may receive gaze detection light reflected from the user's pupil and may track the user's gaze based on the position and movement of the received gaze detection light. In an embodiment, the eye tracking camera 260-1 may be disposed at a position corresponding to the user's left and right eyes. For example, the eye tracking camera 260-1 may be disposed in the first rim 201 and/or the second rim 202 to face the direction in which the user wearing the wearable device 101-1 is positioned.

The motion recognition camera 260-2 and 264 may provide a specific event to the screen provided on the at least one display 250 by recognizing the movement of the whole or portion of the user's body, such as the user's torso, hand, or face. The motion recognition camera 260-2 and 264 may obtain a signal corresponding to motion by recognizing the user's motion (e.g., gesture recognition), and may provide a display corresponding to the signal to the at least one display 250. The processor may identify a signal corresponding to the operation and may perform a preset function based on the identification. In an embodiment, the motion recognition camera 260-2 and camera 264 may be disposed on the first rim 201 and/or the second rim 202.

The camera 260 included in the wearable device 101-1 is not limited to the above-described eye tracking camera 260-1 and the motion recognition camera 260-2 and 264. For example, the wearable device 101-1 may identify an external object included in the FoV by using a camera 260 disposed toward the user's FoV. The wearable device 101-1 identifying the external object may be performed based on a sensor for identifying a distance between the wearable device 101-1 and the external object, such as a depth sensor and/or a time of flight (ToF) sensor. The camera 260 disposed toward the FoV may support an autofocus function and/or an optical image stabilization (OIS) function. For example, in order to obtain an image including a face of the user wearing the wearable device 101-1, the wearable device 101-1 may include the camera 260 (e.g., a face tracking (FT) camera) disposed toward the face.

Although not illustrated, the wearable device 101-1 according to an embodiment may further include a light source (e.g., LED) that emits light toward a subject (e.g., user's eyes, face, and/or an external object in the FoV) photographed by using the camera 260. The light source may include an LED having an infrared wavelength. The light source may be disposed on at least one of the frame 200, and the hinge units 206 and 207.

According to an embodiment, the battery module 270 may supply power to electronic components of the wearable device 101-1. In an embodiment, the battery module 270 may be disposed in the first temple 204 and/or the second temple 205. For example, the battery module 270 may be a plurality of battery modules 270. The plurality of battery modules 270, respectively, may be disposed on each of the first temple 204 and the second temple 205. In an embodiment, the battery module 270 may be disposed at an end of the first temple 204 and/or the second temple 205.

The antenna module 275 may transmit the signal or power to the outside of the wearable device 101-1 or may receive the signal or power from the outside. In an embodiment, the antenna module 275 may be disposed in the first temple 204 and/or the second temple 205. For example, the antenna module 275 may be disposed close to one surface of the first temple 204 and/or the second temple 205.

The speaker 255 may output a sound signal to the outside of the wearable device 101-1. A sound output module may be referred to as a speaker. In an embodiment, the speaker 255 may be disposed in the first temple 204 and/or the second temple 205 in order to be disposed adjacent to the ear of the user wearing the wearable device 101-1. For example, the speaker 255 may include a second speaker 255-2 disposed adjacent to the user's left ear by being disposed in the first temple 204, and a first speaker 255-1 disposed adjacent to the user's right ear by being disposed in the second temple 205.

The light emitting module (not illustrated) may include at least one light emitting element. The light emitting module may emit light of a color corresponding to a specific state or may emit light through an operation corresponding to the specific state in order to visually provide information on a specific state of the wearable device 101-1 to the user. For example, when the wearable device 101-1 requires charging, it may emit red light at a constant cycle. In an embodiment, the light emitting module may be disposed on the first rim 201 and/or the second rim 202.

Referring to FIG. 2B, according to an embodiment, the wearable device 101-1 may include the printed circuit board (PCB) 290. The PCB 290 may be included in at least one of the first temple 204 or the second temple 205. The PCB 290 may include an interposer disposed between at least two sub PCBs. On the PCB 290, one or more hardware (e.g., hardware illustrated by different blocks of FIG. 5) included in the wearable device 101-1 may be disposed. The wearable device 101-1 may include a flexible PCB (FPCB) for interconnecting the hardware.

According to an embodiment, the wearable device 101-1 may include at least one of a gyro sensor, a gravity sensor, and/or an acceleration sensor for detecting the posture of the wearable device 101-1 and/or the posture of a body part (e.g., a head) of the user wearing the wearable device 101-1. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 101-1 may identify the user's motion and/or gesture performed to execute or stop a specific function of the wearable device 101-1 based on the IMU.

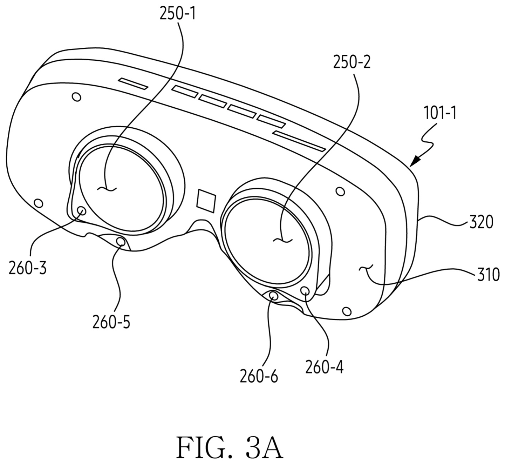

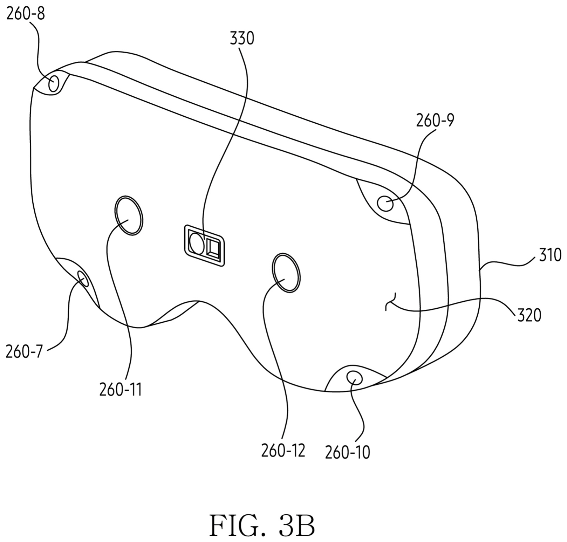

FIGS. 3A and 3B illustrate an example of an exterior of a wearable device according to various embodiments.

The wearable device 101-1 of FIGS. 3A to 3B may be an example of the electronic device 101 of FIG. 1. According to an embodiment, an example of an exterior of a first surface 310 of a housing of the wearable device 101-1 may be illustrated in FIG. 3A, and an example of an exterior of a second surface 320 opposite to the first surface 310 may be illustrated in FIG. 3B.

Referring to FIG. 3A, according to an embodiment, the first surface 310 of the wearable device 101-1 may have an attachable shape on the user's body part (e.g., the user's face). Although not illustrated, the wearable device 101-1 may further include a strap for being fixed on the user's body part, and/or one or more temples (e.g., the first temple 204 and/or the second temple 205 of FIGS. 2A to 2B). A first display 250-1 for outputting an image to the left eye among the user's two eyes and a second display 250-2 for outputting an image to the right eye among the user's two eyes may be disposed on the first surface 310. The wearable device 101-1 may further include rubber or silicon packing, which are formed on the first surface 310, for preventing interference by light (e.g., ambient light) different from the light emitted from the first display 250-1 and the second display 250-2.

According to an embodiment, the wearable device 101-1 may include cameras 260-3 and 260-4 for photographing and/or tracking two eyes of the user adjacent to each of the first display 250-1 and the second display 250-2. For example, the cameras 260-3 and 260-4 may be referred to as ET camera. According to an embodiment, the wearable device 101-1 may include cameras 260-5 and 260-6 for photographing and/or recognizing the user's face. The cameras 260-5 and 260-6 may be referred to as FT camera.

Referring to FIG. 3B, a camera (e.g., cameras 260-7, 260-8, 260-9, 260-10, 260-11, and 260-12), and/or a sensor (e.g., the depth sensor 330) for obtaining information associated with the external environment of the wearable device 101-1 may be disposed on the second surface 320 opposite to the first surface 310 of FIG. 3A. For example, the cameras 260-7, 260-8, 260-9, and 260-10 may be disposed on the second surface 320 in order to recognize an external object. For example, by using cameras 260-11 and 260-12, the wearable device 101-1 may obtain an image and/or video to be transmitted to each of the user's two eyes. The camera 260-11 may be disposed on the second surface 320 of the wearable device 101-1 to obtain an image to be displayed through the second display 250-2 corresponding to the right eye among the two eyes. The camera 260-12 may be disposed on the second surface 320 of the wearable device 101-1 to obtain an image to be displayed through the first display 250-1 corresponding to the left eye among the two eyes.

According to an embodiment, the wearable device 101-1 may include the depth sensor 330 disposed on the second surface 320 in order to identify a distance between the wearable device 101-1 and the external object. By using the depth sensor 330, the wearable device 101-1 may obtain spatial information (e.g., a depth map) about at least a portion of the FoV of the user wearing the wearable device 101-1.

Although not illustrated, a microphone for obtaining sound outputted from the external object may be disposed on the second surface 320 of the wearable device 101-1. The number of microphones may be one or more according to embodiments.

As described above, the wearable device 101-1 according to an embodiment may include hardware (e.g., the cameras 260-7, 206-8, 260-9, 260-10, and/or the depth sensor 330) for identifying a body part including a user's hand. The wearable device 101-1 may identify a gesture indicated by a motion of the body part. The wearable device 101-1 may provide a UI based on the identified gesture to the user wearing the wearable device 101-1. The UI may support a function for editing an image and/or a video stored in the wearable device 101-1. The wearable device 101-1 may communicate with an external electronic device different from the wearable device 101-1 to more accurately identify the gesture.

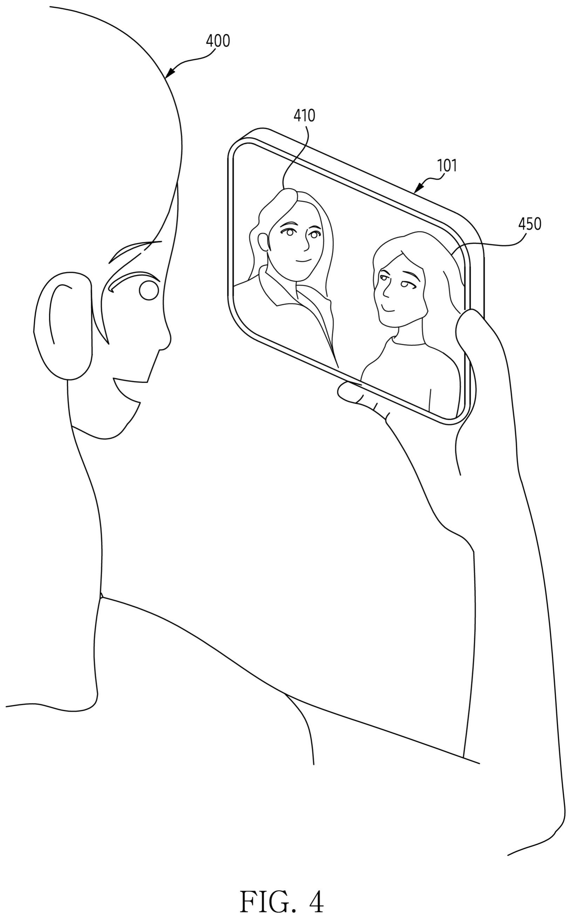

FIG. 4 illustrates an example of a method of identifying a mouth shape of an avatar corresponding to a user according to various embodiments.

The avatar may represent an avatar corresponding to the user in a virtual environment provided by the electronic device 101 of FIG. 1. For example, the user may be a user of the electronic device 101. The virtual environment may represent an example of extended reality (XR) provided via the electronic device 101. For example, the XR may include augmented reality (AR), virtual reality (VR), and mixed reality (MR). For example, the electronic device 101 for AR may augment and provide information based on a real object. For example, the electronic device 101 may include AR glasses or VR glasses for providing information to the user based on the real object. For example, the electronic device 101 may include a video see-through (VST) device. For example, the electronic device 101 may include user equipment. For example, the electronic device 101 may include a personal computer (PC). Hereinafter, the electronic device 101 may be referred to as a wearable device (e.g., the wearable device 101-1 of FIGS. 2A to 3B).

The mouth shape may represent a visual object of a partial area of a face of the avatar. For example, the partial area may represent an area in which a mouse of the face of the avatar is positioned. For example, the mouth shape may be identified by a position and a shape of at least one of the mouth, a lip, or teeth of the mouth. However, an embodiment of the present disclosure is not limited thereto. For example, the mouth shape may include a shape of a face part of the avatar that may be changed according to movement of a muscle or a joint of the face of the avatar based on at least one syllable uttered by the user.

Referring to FIG. 4, an example in which a user 400 performs a video call with another user via the electronic device 101 is illustrated. For example, the user 400 may use a video call service in a manner of talking to another avatar 450 corresponding to the other user using an avatar 410 corresponding to the user 400 in the virtual environment. For example, the electronic device 101 may display the avatar 410 corresponding to the user 400 in the virtual environment and the other avatar 450 corresponding to the other user via a display (e.g., the display module 160). For example, the virtual environment may be connected to the electronic device 101 and an external electronic device (not illustrated) of the other user.

Referring to FIG. 4, the electronic device 101 may generate the avatar 410 by obtaining information on the user 400. For example, the electronic device 101 may generate an appearance and movement of the avatar 410 by obtaining information on an appearance and movement of the user 400. For example, the electronic device 101 may obtain the information on the appearance and the movement of the user 400 via a camera (e.g., the camera module 180) of the electronic device 101. In addition, the electronic device 101 may generate a mouth shape of the avatar 410 and voice that the avatar 410 will utter by obtaining voice information obtained as the user 400 utters. For example, the electronic device 101 may obtain the voice information via a microphone (e.g., the input module 150). However, an embodiment of the present disclosure is not limited thereto. For example, the electronic device 101 may obtain information on the mouth shape of the avatar 410 and the voice that the avatar 410 will utter (or voice information), via an input in a text format. In addition, for example, the electronic device 101 may obtain the information on the mouth shape of the avatar 410 and the voice that the avatar 410 will utter (or the voice information) via a server (or a system) providing the virtual environment. In an example of FIG. 5, the electronic device 101 may obtain information on a mouth shape and voice to be uttered of the other avatar 400 of the other user and information inputted to the external electronic device of the other user, via the server or the system.

Referring to the above description, the electronic device 101 may obtain voice information by the user 400 or the other user. At this time, the electronic device 101 may generate the avatar 410 or the other avatar 450 by obtaining and processing the voice information by the user 400 or the other user. At this time, a difference may occur between a time point when the voice information is obtained (or a time point when the user 400 or the other user utters voice included in the voice information) and a time point when the avatar 410 or the other avatar 450 is generated. The difference may be referred to as a delay time. For example, even though the user 400 opens a mouth and utters voice, the avatar 410 in the virtual environment may have a mouth shape that has not yet uttered. In other words, synchronization between the user 400 and the avatar 410 may not match. For example, the synchronization may be referred to as lip sync, which is synchronization for a mouth shape that changes in real time. For example, the lip sync may be caused by a delay time for the electronic device 101 to process information on the voice uttered by the user 400 and generate the avatar 410 including the mouth shape (or an animation including the avatar 410 having the mouth shape) based on it.

As described above, a method of adjusting the lip sync for voice has been improved by increasing accuracy of identifying voice or increasing image quality of an animation including an avatar. However, the methods of increasing the accuracy of identifying the voice or increasing the image quality as described above may be a method to indirectly solve a problem caused by the lip sync other than directly reducing the lip sync.

Hereinafter, an electronic device and a method optimized for each electronic device for generating an avatar based on real time voice information according to an embodiment of the present disclosure are described. The electronic device and the method according to an embodiment of the present disclosure may quickly and flexibly reduce the lip sync even in an internal environment (or an on-device environment) of the electronic device. In other words, the electronic device and the method according to an embodiment of the present disclosure may quickly generate an avatar (or a mouth shape of the avatar, or an animation including the avatar having the mouth shape) with higher accuracy by monitoring resources in the electronic device and using them efficiently. Accordingly, the electronic device and the method according to an embodiment of the present disclosure may provide a more immersive user experience to the user. In addition, the electronic device and the method according to an embodiment of the present disclosure may secure real time performance even in a multi-tasking environment via an optimized computation to generate the avatar having the mouth shape based on voice during runtime of the electronic device. In addition, the electronic device and method according to an embodiment of the present disclosure may reduce overall resource usage by utilizing only resources of the electronic device itself (on-device) and not using resources of a server providing a virtual environment and additional resources (e.g., data) for connection with the server.

FIG. 5 illustrates an exemplary block diagram of an electronic device according to various embodiments. An electronic device 101 of FIG. 5 may be an example of the electronic device 101 of FIG. 1 and the wearable device 101-1 of FIGS. 2A to 3B.

Referring to FIG. 5, an exemplary situation in which the electronic device 101 and an external electronic device 580 are connected to each other based on a wired network and/or a wireless network is illustrated. For example, the wired network may include a network such as the Internet, a local area network (LAN), a wide area network (WAN), or a combination thereof. For example, the wireless network may include a network such as long term evolution (LTE), 5G new radio (NR), wireless fidelity (WiFi), Zigbee, near field communication (NFC), Bluetooth, Bluetooth low-energy (BLE), or a combination thereof. Although the electronic device 101 and the external electronic device 580 are illustrated as being directly connected, the electronic device 101 and the external electronic device 580 may be indirectly connected via one or more routers and/or APs. In other words, it is exemplified that the electronic device 101 is directly connected to communication circuitry 590 of the external electronic device 580 via communication circuitry 520, but an embodiment of the present disclosure is not limited thereto.

Referring to FIG. 5, according to an embodiment, the electronic device 101 may include at least one of a processor 120, memory 130, a display 510, and the communication circuitry 520. The processor 120, the memory 130, the display 510, and the communication circuitry 520 may be electronically and/or operably coupled with each other by a communication bus. Hereinafter, hardware components being operably coupled may mean that a direct connection or an indirect connection between the hardware components is established by wire or wirelessly so that a second hardware component among the hardware components is controlled by a first hardware component. Although illustrated based on different blocks, an embodiment is not limited thereto, and a portion (e.g., at least a portion of the processor 120, the memory 130, and the communication circuitry 520) of the hardware components illustrated in FIG. 5 may be included in a single integrated circuit such as a system on a chip (SoC). A type and/or the number of hardware components included in the electronic device 101 is not limited to those illustrated in FIG. 5. For example, the electronic device 101 may include only a portion of the hardware components illustrated in FIG. 5.

According to an embodiment, the processor 120 of the electronic device 101 may include a hardware component for processing data based on one or more instructions. The hardware component for processing data may include, for example, an arithmetic and logic unit (ALU), a floating point unit (FPU), and a field programmable gate array (FPGA). As an example, the hardware component for processing data may include a central processing unit (CPU), a graphics processing unit (GPU), a digital signal processing unit (DSP), and/or a neural processing unit (NPU). The number of processors 120 may be one or more. For example, the processor 120 may have a structure of a multi-core processor such as a dual core, a quad core, or a hexa core. The processor 120 of FIG. 5 may include at least a portion of the processor 120 of FIG. 1.

For example, the processor 120 may include various processing circuitry and/or multiple processors. For example, a term "processor" used in this document, including scope of claims, may include various processing circuitry including at least one processor, and one or more of the at least one processor may be configured to perform various functions described below individually or collectively in a distributed manner. As used below, in case that "processor", "at least one processor", and "one or more processors" are described as being configured to perform various functions, these terms encompass, for example without limitation, situations in which one processor performs a portion of cited functions and other processor(s) perform another portion of the cited functions, and also situations in which one processor may perform all of the cited functions. Additionally, the at least one processor may include a combination of processors that perform various functions listed/disclosed, for example, in a distributed manner. The at least one processor may execute program instructions to accomplish or perform various functions.

According to an embodiment, the memory 130 of the electronic device 101 may include a hardware component for storing data and/or instructions inputted to or outputted from the processor 120. The memory 130 may include, for example, volatile memory, such as random-access memory (RAM), and/or non-volatile memory, such as read-only memory (ROM). The volatile memory may include, for example, at least one of dynamic RAM (DRAM), static RAM (SRAM), cache RAM, and pseudo-SRAM (PSRAM). The non-volatile memory may include, for example, at least one of programmable ROM (PROM), erasable PROM (EPROM), electrically erasable PROM (EEPROM), flash memory, a hard disk, a compact disc, and an embedded multimedia card (eMMC). The memory 130 of FIG. 5 may include at least a portion of the memory 130 of FIG. 1.

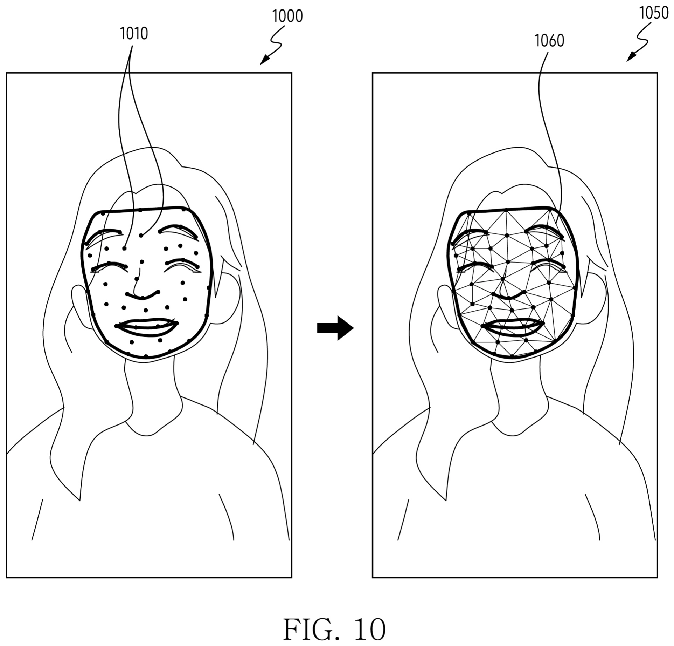

According to an embodiment, the display 510 of the electronic device 101 may output visualized information (e.g., a screen of FIG. 4 and FIG. 10) to a user. The number of displays 510 included in the electronic device 101 may be one or more. For example, the display 510 may may output visualized information to the user by being controlled by the processor 120 and/or a graphic processing unit (GPU) (not illustrated). The display 510 may include a flat panel display (FPD) and/or electronic paper. The FPD may include a liquid crystal display (LCD), a plasma display panel (PDP), a digital mirror device (DMD), one or more light emitting diodes (LEDs), and/or a micro LED. The LED may include an organic LED (OLED). The display 510 of FIG. 5 may include at least a portion of the display module 160 of FIG. 1.

In an embodiment, transmission of light may occur in at least a portion of the display 510. The electronic device 101 may provide a user experience related to augmented reality by providing a combination of light outputted via the display 510 and light transmitted via the display 510 to the user. As described above with reference to FIGS. 2A and 2B, and/or 3A and 3B, the display 510 of the electronic device 101 according to an embodiment may have a structure for covering an entire field-of-view (FoV) of the user or emitting light toward the FoV in a state of being worn on a body part of the user, such as a head. Although not illustrated, the electronic device 101 may include another output means for outputting information in another form other than a visual form and an audible form. For example, the electronic device 101 may include at least one speaker for outputting an audio signal, and/or a motor (or an actuator) for providing haptic feedback based on vibration.

The communication circuitry 520 of the electronic device 101 according to an embodiment may include hardware for supporting transmission and/or reception of an electrical signal between the electronic device 101 and the external electronic device 580. The communication circuitry 520 may include, for example, at least one of a MODEM, an antenna, and an optic/electronic (O/E) converter. The communication circuitry 520 may support transmission and/or reception of an electrical signal based on various types of communication means, such as Ethernet, Bluetooth, Bluetooth low energy (BLE), ZigBee, long term evolution (LTE), and 5G new radio (NR). The communication circuitry 520 of FIG. 5 may include at least a portion of the communication module 190 and/or the antenna module 197 of FIG. 1.

Although not illustrated, the electronic device 101 according to an embodiment may include an output means for outputting information in a form other than a visualized form. For example, the electronic device 101 may include a speaker for outputting an acoustic signal. For example, the electronic device 101 may include a motor for providing haptic feedback based on vibration.

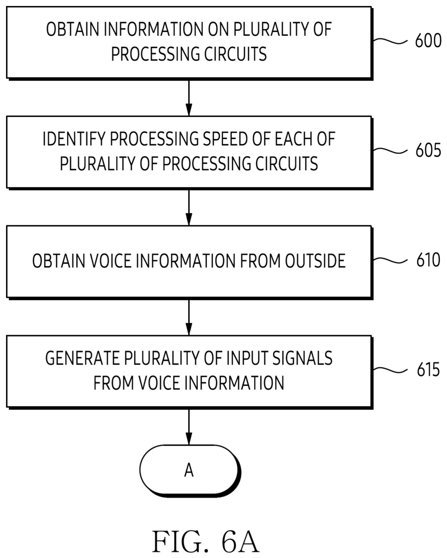

Referring to FIG. 5, one or more instructions (or commands) indicating a calculation and/or an operation to be performed on data by the processor 120 of the electronic device 101 may be stored in the memory 130 of the electronic device 101. A set of one or more instructions may referred to as firmware, an operating system, a process, a routine, a sub-routine, and/or an application. Hereinafter, an application being installed in the electronic device 101 may mean that one or more instructions provided in a form of an application are stored in the memory 130, and that the one or more applications are stored in a format (e.g., a file having an extension specified by an operating system of the electronic device 101) executable by the processor of the electronic device. According to an embodiment, the electronic device 101 may perform operations of FIGS. 6A and 6B, FIG. 13, and FIG. 14 by executing one or more instructions stored in the memory 130.

Referring to FIG. 5, one or more instructions included in the memory 130 may be divided into a processing circuit performance identifying portion 530, a voice information obtaining portion 540, a voice feature identifying portion 550, a mouth shape identifying portion 560, and/or an avatar generating portion 570. For example, each of the processing circuit performance identifying portion 530, the voice information obtaining portion 540, the voice feature identifying portion 550, the mouth shape identifying portion 560, and/or the avatar generating portion 570 may be implemented as a program or software.

For example, the electronic device 101 may obtain information on a plurality of processing circuits using the processing circuit performance identifying portion 530. For example, the plurality of processing circuits may include a central processing unit (CPU), a graphic processing unit (GPU), or a neural processing unit (NPU). The plurality of processing circuits may represent circuits for performing processing on voice information obtained via the voice information obtaining portion 540. For example, information on the plurality of processing circuits may include at least one of information indicating whether the NPU or the GPU is included in the electronic device 101, or information indicating a manufacturer of the CPU. For example, during runtime of an artificial intelligence model, the electronic device 101 may obtain the information on the plurality of processing circuits based on a framework of the artificial intelligence model. For example, the electronic device 101 may obtain information on the plurality of processing circuits that the framework of the artificial intelligence model may support. In other words, the electronic device 101 may obtain information on portions, among processing circuits actually included in it, that the framework may support. The portions may be referred to as the plurality of processing circuits. However, an embodiment of the present disclosure is not limited thereto. For example, the electronic device 101 may obtain information on a plurality of processing circuits included in the electronic device 101 via a separate user interface of a software application to provide the virtual environment. For example, the information may be inputted by the user.

For example, the electronic device 101 may identify performance of each of the plurality of processing circuits using the processing circuit performance identifying portion 530. For example, the electronic device 101 may identify processing speed of each of the plurality of processing circuits. At this time, the electronic device 101 may identify processing speed for each processing algorithm with respect to voice information processed by the plurality of processing circuits. For example, the electronic device 101 may identify first processing speed of each of the plurality of processing circuits with respect to feature value identification to be described later. For example, the electronic device 101 may identify second processing speed of each of the plurality of processing circuits with respect to mouth shape identification to be described later. For example, the electronic device 101 may identify third processing speed of each of the plurality of processing circuits with respect to voice part enhancement to be described later. For example, the first processing speed may be identified by performing the feature value identification based on reference data in each of the plurality of processing circuits. For example, the second processing speed may be identified by performing the mouth shape identification based on reference data in each of the plurality of processing circuits. For example, the third processing speed may be identified by performing the voice part enhancement based on reference data in each of the plurality of processing circuits. The reference data may represent dummy data for identifying the performance of each of the plurality of processing circuits. For example, each of the first processing speed, the second processing speed, and the third processing speed may be defined as a ratio of processing time to a time length of inputted data (e.g., a length of the reference data). For example, the ratio may be referred to as a real time ratio (RT). For example, the first processing speed may include processing speed of a CPU that performs the feature value identification using an artificial model, processing speed of an NPU that performs the feature value identification using the artificial model, processing speed of a GPU that performs the feature value identification using the artificial model, or processing speed of a CPU that performs the feature value identification using a mel frequency cepstral coefficient (MFCC) algorithm.

For example, the electronic device 101 may update the performance of each of the plurality of processing circuits using the processing circuit performance identifying portion 530. For example, the electronic device 101 may generate an avatar generated based on a processing circuit identified based on processing speed (e.g., the first processing speed or the second processing speed) among the plurality of processing circuits, with respect to voice information obtained using the voice information obtaining portion 540 to be described later. At this time, the electronic device 101 may store actual processing speed of processing the voice information based on the processing circuit. The actual processing speed and the processing speed (or expected processing speed) identified based on the reference data may be different from each other. This may be because the expected processing speed is speed at which the reference data is processed, and the actual processing speed is speed at which the voice information is processed, as they process different data. In addition, it may be because a first time point (timing) at which the expected processing speed is measured and a second time point at which the actual processing speed processing the voice information is identified are different from each other. For example, at the first time point, the plurality of processing circuits may not be used. However, at the second time point, a portion of processing circuits among of the plurality of processing circuits may also be used for processing other than processing the voice information. Therefore, the electronic device 101 may update the actual processing speed as performance for a processing circuit in which the actual processing speed is measured. The electronic device 101 may identify a processing circuit for voice information to be obtained in the future among the plurality of processing circuits based on the actual processing speed. For example, the expected processing speed may be referred to as processing speed predicted based on the reference data.

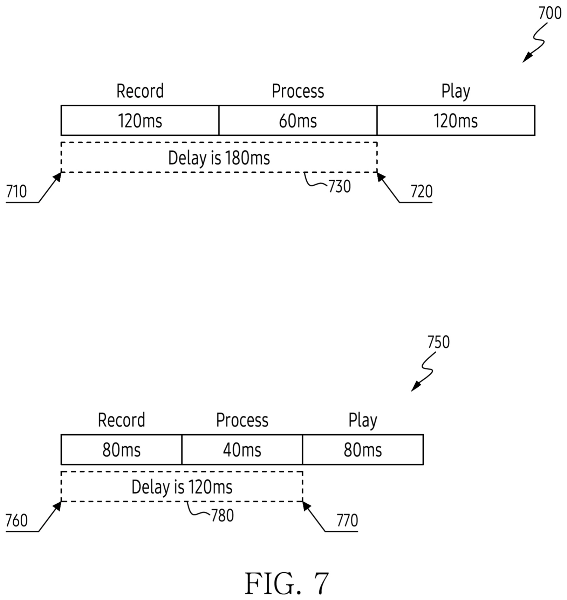

For example, the electronic device 101 may obtain voice information by using the voice information obtaining portion 540. The voice information may be referred to as voice data. For example, the voice information may include voice, noise, or background sound. For example, the voice information may be obtained from outside the electronic device 101. For example, the voice information may be transmitted from the external electronic device 580 via a server or a system for providing the virtual environment. For example, the voice information may be obtained via a microphone of the electronic device 101 as the user of the electronic device 101 utters. For example, the voice information may include a text input to the electronic device 101 or the external electronic device 580. For example, the text input may include machine-synthesized voice such as text to speech (TTS). For example, the voice information may be configured with an entire utterance, a sentence, a word, or a specified length of the user of the electronic device 101 or another user of the external electronic device 580. For example, the specified length may be defined as a specified size (e.g., n bytes) or a specified time length. For example, the voice information may be configured with a plurality of input signals. Each of the plurality of input signals may be configured with the specified length. Specific details related to the plurality of input signals configuring the voice information will be described below in FIG. 7.

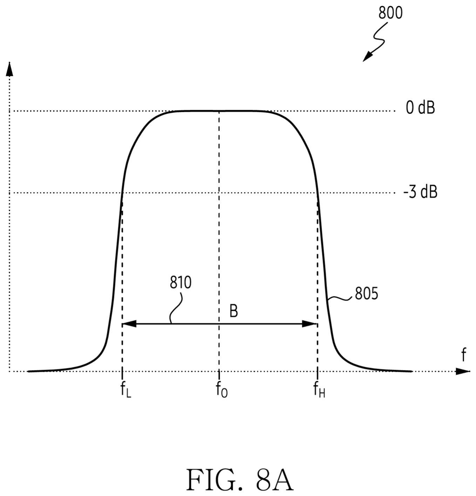

For example, the electronic device 101 may enhance a voice feature by using the voice feature identifying portion 550. For example, enhancing the voice feature may include removing noise of the voice information, enhancing a voice part of the voice information, and normalizing volume of the voice part. Enhancing the voice feature may be referred to as voice enhancement. For example, the electronic device 101 may remove signals of a frequency region identified as the noise among the voice information by using a band pass filter (BPF). Specific details related thereto will be described below in FIG. 8A.

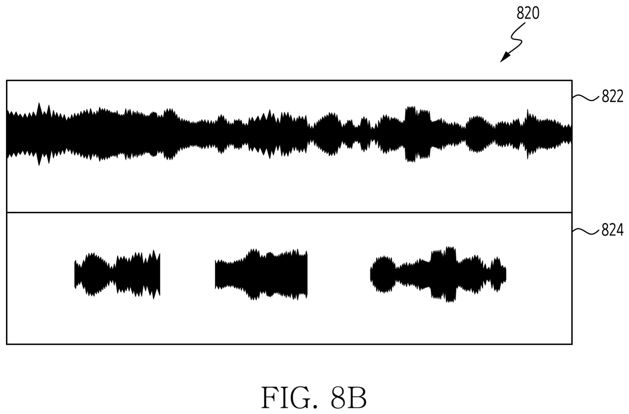

For example, the electronic device 101 may enhance a voice part with respect to the voice information from which the noise has been removed. For example, the electronic device 101 may enhance the voice part by using an artificial model (AI model). For example, enhancement based on the artificial model may be performed based on a central processing unit (CPU), a graphic processing unit (GPU), or a neural processing unit (NPU) among the plurality of processing circuits of the electronic device 101. Alternatively, the electronic device 101 may enhance the voice part by using a computational algorithm. The computational algorithm may represent a non-AI model-based process. For example, the computational algorithm may include an improved minima controlled recursive averaging (IMCRA) algorithm or a log minimum mean square error (logMMSE) algorithm. For example, enhancement based on the computational algorithm may be performed based on the central processing unit (CPU) among the plurality of processing circuits of the electronic device 101. However, an embodiment of the present disclosure is not limited thereto, and the computational algorithm may include an algorithm capable of enhancing the voice part from the voice information. In other words, the electronic device 101 may use the artificial model based on the CPU, the GPU, or the NPU among the plurality of processing circuits, or may use the computational algorithm based on the CPU. Specific details related thereto will be described below in FIGS. 8B to 8C.

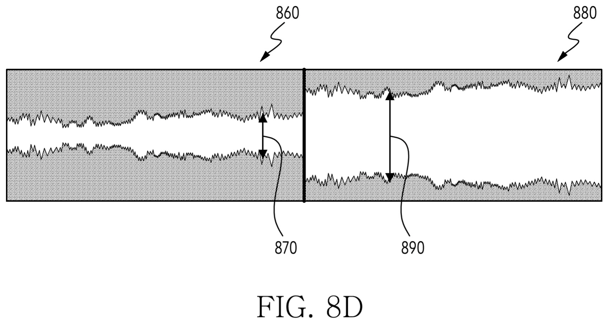

For example, the electronic device 101 may normalize the voice information for which the voice part has been enhanced. For example, the normalization for the voice information (or the voice part) may represent adjusting volume of the voice information. For example, the electronic device 101 may change the volume of the voice information to have a value within a specified range. The specified range may be set for a normalized input for an artificial intelligence model for processing the voice information. In other words, the artificial intelligence model may generate a more accurate output based on the normalized input. In the above-described example, the specified range is exemplarily as being set for the artificial intelligence model, but an embodiment of the present disclosure is not limited thereto. For example, when the voice information has a value within the specified range, quantitative comparison between different voice information is possible, and thus computation may be simplified. Specific details related thereto will be described below in FIG. 8D.

For example, the electronic device 101 may obtain feature values using the voice feature identifying portion 550. For example, the electronic device 101 may extract the feature values from the voice information, which is an analog signal. For example, the electronic device 101 may obtain the feature values based on a mel frequency cepstral coefficient (MFCC) algorithm. For example, the electronic device 101 may obtain a spectrum by applying fast-Fourier transform (FFT) for each frame with respect to the voice information. For example, the electronic device 101 may obtain the spectrum for a frequency region by applying the FFT with respect to the voice information. The electronic device 101 may obtain a mel spectrum by applying a mel filter bank with respect to the spectrum. For example, the electronic device 101 may obtain the mel spectrum based on a mel scale representing a relationship between the frequency region and a low frequency band perceived by a real person. The electronic device 101 may obtain MFCCs by applying a cepstral analysis with respect to the mel spectrum. The MFCCs may be referred to by the feature values. For example, the electronic device 101 may obtain the feature values, which are a portion of all feature values that are peaks obtained based on the cepstral analysis. The peaks may be referred to as formants. For example, the feature values may be 40 in number. However, an embodiment of the present disclosure is not limited thereto. For example, the number of the feature values may be less than 40 or more than 40.

For example, the electronic device 101 may train the artificial intelligence model based on the obtained feature values. In other words, the electronic device 101 may train the artificial intelligence model using the feature values as inputs. Accordingly, the electronic device 101 may obtain refined feature values. In the above-described example, a method in which the electronic device 101 obtains the feature values based on the MFCC algorithm and uses the feature values without additional processing or refines the feature values using the artificial intelligence model is exemplified, but an embodiment of the present disclosure is not limited thereto.

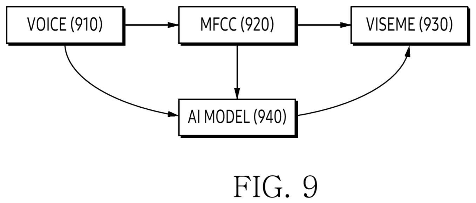

For example, the electronic device 101 may obtain the feature values without the MFCC algorithm based on the voice information using the artificial intelligence model. For example, when a processing circuit having relatively high processing speed (e.g., the NPU or the GPU) among the plurality of processing circuits of the electronic device 101 is available, the electronic device 101 may obtain the feature values using the artificial intelligence model. In contrast, when a processing circuit having relatively low processing speed (e.g., the CPU) among the plurality of processing circuits of the electronic device 101 is available, the electronic device 101 may obtain the feature values using the MFCC algorithm. Specific details related thereto will be described below in FIG. 9.

Referring to the above description, the electronic device 101 may use the artificial intelligence model based on the plurality of processing circuits. For example, the plurality of processing circuits may include the CPU, the GPU, or the NPU. In addition, the electronic device 101 may use the MFCC algorithm based on the CPU.

For example, the electronic device 101 may obtain information for generating a mouth shape with respect to the voice information by using the mouth shape identifying portion 560. For example, the information for generating the mouth shape may include at least one of a visual phoneme (viseme), a face landmark, a blend weight, or a face mesh with respect to the voice information. For example, the visual phoneme may represent a mouth shape symbol of an avatar indicating that the voice of the voice information is uttered. For example, the face landmark may represent coordinates of a face of the avatar for indicating that the voice of the voice information is uttered. For example, the face landmark may include three-dimensional coordinates or two-dimensional coordinates. The blend weight may represent an emotion parameter for changing a facial expression of the avatar. For example, the blend weight may be obtained based on a retargeting model. For example, the blend weight may be obtained from the face landmark or the voice information. For example, the face mesh may represent a mesh formed by points of the face landmark. Specific details related thereto will be described below in FIG. 10.

For example, the electronic device 101 may obtain information for generating the mouth shape by using the artificial intelligence model. For example, the electronic device 101 may use the artificial intelligence model based on the plurality of processing circuits. For example, the plurality of processing circuits may include the CPU, the GPU, or the NPU.

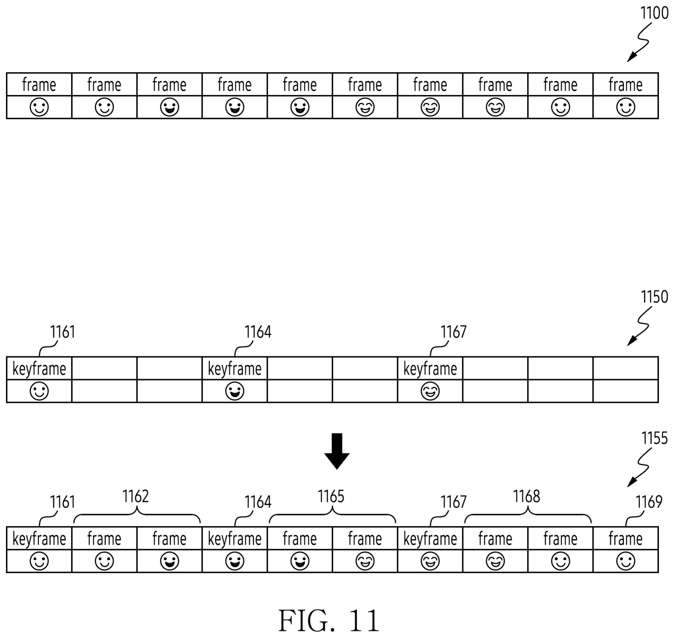

For example, the electronic device 101 may generate an avatar having the mouth shape by using the avatar generating portion 570. For example, the electronic device 101 may obtain the avatar having the mouth shape based on the information for generating the mouth shape obtained via the mouth shape identifying portion 560. For example, the electronic device 101 may generate an animation including the avatar having the mouth shape. For example, the animation may represent visual information including the virtual environment and the avatar during time corresponding to a plurality of frames. For example, the plurality of frames may be referred to as playback frames set with respect to the animation. The animation may include the avatar having the mouth shape of each of the plurality of frames. The plurality of frames may include key frames of a specified period. For example, the electronic device 101 may generate the avatar having the mouth shape with respect to each of the plurality of frames, or may generate the avatar having the mouth shape with respect to each of the key frames. Specific details related thereto will be described below in FIG. 11.

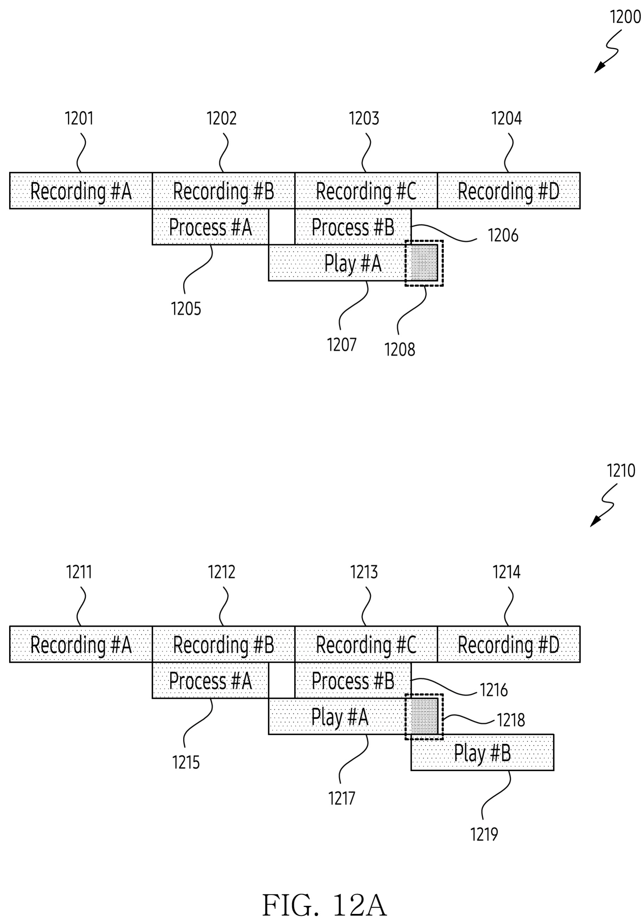

For example, the electronic device 101 may display the generated avatar via the display 510 by using the avatar generating portion 570. For example, the electronic device 101 may display the animation including the avatar via the display 510. In other words, the electronic device 101 may display the avatar or the animation including the avatar via the display 510. The electronic device 101 may play the avatar or the animation via the display 510. At this time, the electronic device 101 may change playback speed, delete a portion of contents, or use a parallel processing method in order to minimize a delay time felt by the user (e.g., the user 400). Specific details related thereto will be described below in FIGS. 12A to 12C.

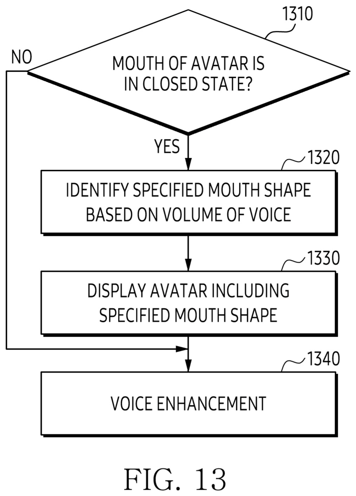

For example, the electronic device 101 may identify, before displaying the avatar generated with respect to the voice information, whether a mouth of a currently displayed avatar is in a closed state, by using the avatar generating portion 570. For example, the currently displayed avatar may be displayed as the electronic device 101 executes a software application that provides the virtual environment. "Before displaying the avatar" may include time before the electronic device 101 performs processing on the obtained voice information after obtaining the voice information. For example, when the mouth is in the closed state, the electronic device 101 may display the avatar having a specified mouth shape based on volume of the voice information via the display 510. In other words, when the currently displayed avatar does not open the mouth and the voice information that the user (e.g., the user 400) utters is obtained, the avatar having the specified mouth shape based on the volume of the voice information may be displayed in order to reduce a delay that the user may experience. Specific details related thereto will be described below in FIG. 13.

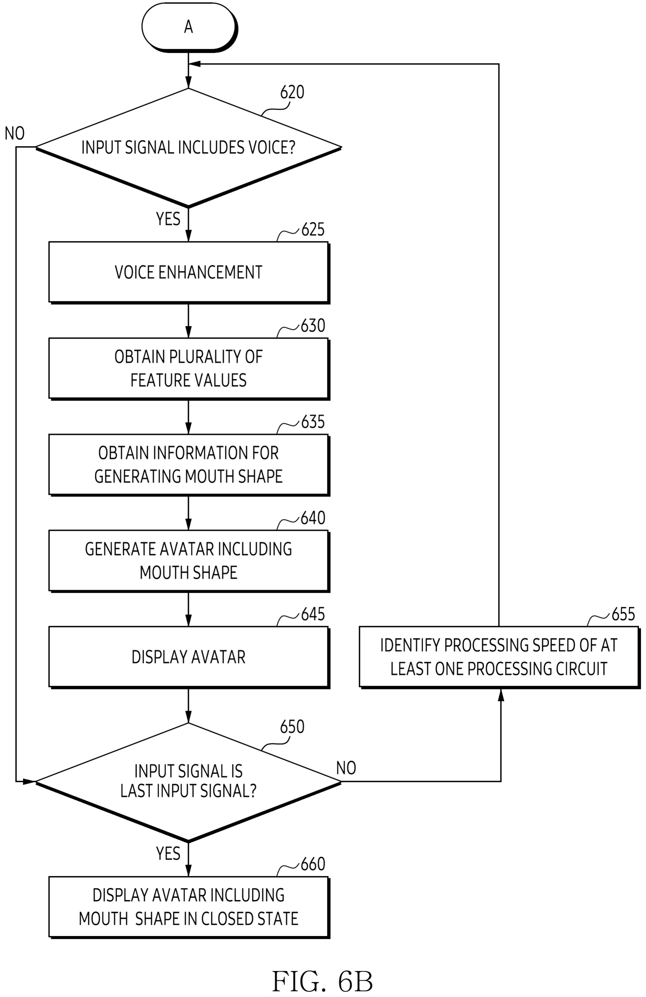

FIGS. 6A and 6B illustrate an example of a flowchart of a method of identifying a mouth shape of an avatar in a virtual environment according to various embodiments.

At least a portion of the method of FIGS. 6A and 6B may be performed by the electronic device 101 of FIG. 5. For example, at least a portion of the method may be controlled by the processor 120 of the electronic device 101.

Referring to FIGS. 6A and 6B, in operation 610, the processor 120 may obtain information on a plurality of processing circuits. For example, the processor 120 may obtain information on the plurality of processing circuits related to generation of the mouth shape. For example, the plurality of processing circuits may include a central processing unit (CPU), a graphic processing unit (GPU), or a neural processing unit (NPU). The plurality of processing circuits may represent circuits for performing processing on voice information. For example, the information on the plurality of processing circuits may include at least one of information indicating whether the NPU or the GPU is included in the electronic device 101, or information indicating a manufacturer of the CPU. The information indicating the manufacturer of the CPU may be referred to as information indicating a manufacturer of an application processor (AP). For example, the information indicating the manufacturer of the AP may include a software development kit (SDK). This is because, when using the GPU or the NPU in the AP, the SDK to be used may be changed according to the manufacturer of the AP.

For example, the processor 120 may obtain information on the plurality of processing circuits based on a framework of an artificial intelligence model during runtime of the artificial intelligence model. For example, the processor 120 may obtain information on the plurality of processing circuits that the framework of the artificial intelligence model may support. In other words, even when actually including various processing circuits, the electronic device 101 may obtain information on portions of the various processing circuits that the framework may support. The portions may be referred to as the plurality of processing circuits. However, an embodiment of the present disclosure is not limited thereto. For example, the electronic device 101 may obtain information on the plurality of processing circuits included in the electronic device 101 via a user interface of a software application for providing the virtual environment. For example, the information may be inputted by a user.

In operation 605, the processor 120 may identify processing speed of each of the plurality of processing circuits. For example, the processor 120 may identify processing speed of each of the plurality of processing circuits for each processing algorithm with respect to voice information. For example, the processing algorithm may include at least one of voice enhancement, feature value identification, mouth shape identification, and avatar (or animation) generation and display with respect to the voice information obtained from the outside.

For example, the processor 120 may identify processing speed of each of the plurality of processing circuits using reference data with respect to the processing algorithm. For example, the electronic device 101 may identify first processing speed of each of the plurality of processing circuits with respect to the feature value identification. For example, the electronic device 101 may identify second processing speed of each of the plurality of processing circuits with respect to the mouth shape identification. For example, the electronic device 101 may identify third processing speed of each of the plurality of processing circuits with respect to the voice enhancement. For example, the first processing speed may be identified by performing the feature value identification based on reference data in each of the plurality of processing circuits. For example, the second processing speed may be identified by performing the mouth shape identification based on reference data in each of the plurality of processing circuits. For example, the third processing speed may be identified by performing the voice enhancement based on reference data in each of the plurality of processing circuits. The reference data may represent dummy data for identifying the performance of each of the plurality of processing circuits. For example, the first processing speed may include processing speed of a CPU that performs the feature value identification using an artificial model, processing speed of an NPU that performs the feature value identification using the artificial model, processing speed of a GPU that performs the feature value identification using the artificial model, or processing speed of a CPU that performs the feature value identification using a mel frequency cepstral coefficient (MFCC) algorithm (or a non-AI model-based processing algorithm). For example, each of the first processing speed, the second processing speed, and the third processing speed may be defined as a ratio of processing time to a time length of inputted data (e.g., a length of the reference data). For example, the ratio may be referred to as a real time ratio (RT). A specific example related thereto is as follows in a table below.

**[Table 1]**

| Processing algorithm | Processing circuit | Real time ratio |
|---|---|---|
| Noise removal (Non-AI based) | CPU | 0.10RT |
| Noise removal (Non-AI based) | GPU | 0.02RT |
| Voice part enhancement (AI based) | CPU | 0.13RT |
| Voice part enhancement (AI based) | GPU | 0.01RT |
| Feature value identification (AI based) | CPU | 0.03RT |
| Feature value identification (AI based) | GPU | 0.02RT |
| Feature value identification (AI based) | NPU | 0.01RT |
| Feature value identification (Non-AI based) | CPU | 0.02RT |
| Mouth shape identification (AI based) | CPU | 0.13RT |
| Mouth shape identification (AI based) | GPU | 0.03RT |
| Mouth shape identification (AI based) | NPU | 0.01RT |

Referring to the table, the processor 120 may identify processing speed (or real time ratio) of each of the plurality of processing circuits for each processing algorithm. At this time, the processing algorithm may include an algorithm based on AI and an algorithm not based on AI (non-AI model-based). The algorithm not based on AI may also be referred to as a computational algorithm.

For example, when a length of the input information is 120 ms and a processing time with respect to a specific processing algorithm via the CPU is 60 ms, a real time ratio of the CPU with respect to the specific processing algorithm may be 0.5 RT. In addition, for example, when the length of the input information is 120 ms and a processing time with respect to a specific processing algorithm via the GPU is 36 ms, a real time ratio of the GPU with respect to the specific processing algorithm may be 0.3 RT. In addition, for example, when the length of the input information is 120 ms and a processing time with respect to a specific processing algorithm via the NPU is 15 ms, a real time ratio of the NPU with respect to the specific processing algorithm may be 0.125 RT. For example, the processor 120 may identify a processing circuit with respect to the specific processing algorithm based on the processing speed of each of the plurality of processing circuits. In the example, as the real time ratio of the NPU with respect to the specific algorithm has the smallest value, the processor 120 may identify the NPU as the processing circuit with respect to the specific algorithm. A specific example of a method for identifying the processing circuit is as follows in a table below.

**[Table 2]**

| Processing algorithm | Processing circuit | Real time ratio | Selection |
|---|---|---|---|
| Noise removal (Non-AI based) | CPU | 0.10RT | |
| Noise removal (Non-AI based) | GPU | 0.02RT | **O** |
| Voice part enhancement (AI based) | CPU | 0.13RT | |
| Voice part enhancement (AI based) | GPU | 0.01RT | **O** |
| Feature value identification (AI based) | CPU | 0.03RT | |
| Feature value identification (AI based) | GPU | 0.02RT | |
| Feature value identification (AI based) | NPU | 0.01RT | **O** |
| Feature value identification (Non-AI based) | CPU | 0.02RT | |
| Mouth shape identification (AI based) | CPU | 0.13RT | |
| Mouth shape identification (AI based) | GPU | 0.03RT | |
| Mouth shape identification (AI based) | NPU | 0.01RT | **O** |

Referring to the table, the processor 120 may select (or identify) a processing circuit having the shortest processing speed among the plurality of processing circuits for each processing algorithm.

For example, the processor 120 may change a length of voice information, which is an input of a processing algorithm, in relation to the real time ratio. For example, the processor 120 may change the length of the voice information when the real time ratio has a value equal to or greater than 1.0 RT. For example, when a length of the voice information is 120 ms and the real time ratio of the CPU with respect to the specific algorithm is 1.0 RT, the processor 120 may reduce (e.g., less than 120 ms) or increase (e.g., greater than 120 ms) the length of the voice information to be processed by the CPU. For example, the length of the voice information may be reduced from 120 ms to 60 ms. In the example, the voice information may be configured as one input signal. However, an embodiment of the present disclosure is not limited thereto, and the voice information may include a plurality of input signals having the length.

In operation 610, processor 120 may obtain voice information from the outside. For example, the voice information may be referred to as voice data. For example, the voice information may include voice, noise, or background sound. For example, the voice information may be obtained from outside the electronic device 101. For example, the voice information may be transmitted from an external electronic device 580 via a server or a system for providing the virtual environment. For example, the voice information may be obtained via a microphone of the electronic device 101 as the user of the electronic device 101 utters. For example, the voice information may include a text input to the electronic device 101 or the external electronic device 580. For example, the text input may include machine-synthesized voice such as text to speech (TTS).

In operation 615, the processor 120 may generate a plurality of input signals from the voice information. For example, the voice information may be configured with an entire utterance, a sentence, a word, or a specified length of the user of the electronic device 101 or another user of the external electronic device 580. For example, the specified length may be defined as a specified size (e.g., n bytes) or a specified time length. For example, the voice information may be configured with a plurality of input signals. Each of the plurality of input signals may be configured with the specified length. However, an embodiment of the present disclosure is not limited thereto, and when the voice information is set to the specified time length, the voice information may be configured as one input signal. Each input signal among the plurality of input signals may be a unit in which a processing algorithm with respect to an input signal is performed. Specific details related to the plurality of input signals configuring the voice information will be described below in FIG. 7.

Referring to FIG. 6B, in operation 620, the processor 120 may identify whether an input signal includes voice. For example, the processor 120 may identify one input signal among the plurality of input signals. For example, the one input signal may be determined over time. For example, the one input signal may represent an initial input signal among the plurality of input signals. Hereinafter, for convenience of description, the one input signal (or the initial input signal) may be referred to as a first input signal.

For example, the processor 120 may identify whether the first input signal includes voice. In the operation 620, when the first input signal includes voice, the processor 120 may perform operation 625. For example, when the first input signal includes voice, the processor 120 may apply a processing algorithm with respect to the first input signal. In contrast, in the operation 620, when the first input signal does not include voice, the processor 120 may perform operation 650. For example, when the first input signal does not include voice, the processor 120 may not apply the processing algorithm with respect to the first input signal.

Although not illustrated in FIGS. 6A and 6B, in the operation 620, in response to identifying that the first input signal includes voice, the processor 120 may identify whether a mouth of a currently displayed avatar is in a closed state. For example, the processor 120 may display the avatar corresponding to the user of the electronic device 101 in response to execution of a software application providing the virtual environment. In a state in which the avatar is displayed, the processor 120 may perform at least one of operation 600 to the operation 615. For example, in the state, the processor 120 may obtain voice information from the outside. For example, before processing the first input signal, the processor 120 may identify whether another input signal exists. In other words, the processor 120 may identify whether an avatar with respect to other voice information prior to voice information including the first input signal is displayed, or whether the first input signal is an initial input signal in the voice information. In a case that the first input signal is the initial input signal or the avatar with respect to the other voice information is not displayed, the processor 120 may identify a specified mouth shape based on volume of the first input signal. The processor 120 may display an avatar including the identified specified mouth shape via a display 510. Specific details related thereto will be described below in FIG. 13.

In the operation 625, the processor 120 may perform voice enhancement. For example, the processor 120 may perform the voice enhancement on the first input signal. For example, the voice enhancement may include removing noise of the voice information (or the first input signal), enhancing a voice part relative to background noise of the voice information (or the first input signal), and normalizing volume of the voice information (or the first input signal). For example, the processor 120 may identify a processing circuit for processing each of noise removal, enhancement of a voice part, and normalization. For example, the processor 120 may identify a processing circuit for processing the noise removal among the plurality of processing circuits based on processing speed with respect to the noise removal. For example, the processor 120 may identify a processing circuit for processing the enhancement of the voice part among the plurality of processing circuits based on processing speed with respect to the enhancement of the voice part. For example, the processor 120 may identify a processing circuit for processing the normalization among the plurality of processing circuits based on processing speed with respect to the normalization.

For example, based on the processing circuit identified based on the processing speed, the processor 120 may remove signals of a frequency region identified as the noise among the first input signal by using a band pass filter (BPF). Specific details related thereto will be described below in FIG. 8A.

For example, the processor 120 may enhance a voice part with respect to the voice information from which the noise has been removed, using the processing circuit identified based on the processing speed. For example, the processor 120 may enhance the voice part by using an artificial model (AI model). For example, enhancement based on the artificial model may be performed based on a central processing unit (CPU), a graphic processing unit (GPU), or a neural processing unit (NPU) among the plurality of processing circuits of the electronic device 101. Alternatively, the processor 120 may enhance the voice part by using a computational algorithm. The computational algorithm may represent a non-AI model-based algorithm. For example, the computational algorithm may include an improved minima controlled recursive averaging (IMCRA) algorithm or a log minimum mean square error (logMMSE) algorithm. For example, enhancement based on the computational algorithm may be performed based on the central processing unit (CPU) among the plurality of processing circuits of the electronic device 101. In other words, the processor 120 may use the artificial model based on the CPU, the GPU, or the NPU among the plurality of processing circuits, and may use the computational algorithm based on the CPU. Specific details related thereto will be described below in FIGS. 8B to 8C.

For example, the processor 120 may normalize the voice information for which the voice part has been enhanced, using the processing circuit identified based on the processing speed. For example, the normalization for the voice information may represent adjusting volume of the voice information. For example, the processor 120 may change the volume of the voice information to be positioned within a specified range. The specified range may be set to input normalized input information for an artificial intelligence model for processing the voice information. In other words, the artificial intelligence model may generate a more accurate output in a case that the normalized input information is used as an input. In the above-described example, the specified range is exemplarily as being set for the artificial intelligence model, but an embodiment of the present disclosure is not limited thereto. For example, when the voice information has a value within the specified range, quantitative comparison between different voice information is possible, and thus computation may be simplified. Specific details related thereto will be described below in FIG. 8D.

In operation 630, the processor 120 may obtain a plurality of feature values. For example, the processor 120 may obtain the plurality of feature values based on the processing circuit identified based on the processing speed. For example, the processor 120 may extract the plurality of feature values from the first input signal (or the voice information), which is an analog signal. For example, the processor 120 may obtain the feature values based on a mel frequency cepstral coefficient (MFCC) algorithm.

For example, the processor 120 may obtain a spectrum by applying fast-Fourier transform (FFT) with respect to the first input signal. For example, the processor 120 may obtain the spectrum for a frequency region by applying the FFT with respect to the first input signal. The processor 120 may obtain a mel spectrum by applying a mel filter bank with respect to the spectrum. For example, the processor 120 may obtain the mel spectrum based on a mel scale representing a relationship between the frequency region and a low frequency band perceived by a real person. The processor 120 may obtain MFCCs by applying a cepstral analysis with respect to the mel spectrum. The MFCCs may be referred to by the feature values. For example, the processor 120 may obtain the feature values, which are a portion of all feature values that are peaks obtained based on the cepstral analysis. The peaks may be referred to as formants. For example, the feature values may be 40 in number. However, an embodiment of the present disclosure is not limited thereto. For example, the processor 120 may train the artificial intelligence model based on the obtained feature values. In other words, the processor 120 may train the artificial intelligence model using the feature values as inputs. Accordingly, the processor 120 may obtain refined feature values.

In the above-described example, a method in which the electronic device 101 obtains the feature values based on the MFCC algorithm and uses the feature values without additional processing or refines the feature values using the artificial intelligence model is exemplified, but an embodiment of the present disclosure is not limited thereto. For example, the processor 120 may obtain the feature values without the MFCC algorithm based on the voice information using the artificial intelligence model. For example, when a processing circuit having relatively high processing speed (e.g., the NPU or the GPU) among the plurality of processing circuits of the electronic device 101 is available, the processor 120 may obtain the feature values using the artificial intelligence model. In contrast, when a processing circuit having relatively low processing speed (e.g., the CPU) among the plurality of processing circuits of the electronic device 101 is available, the processor 120 may obtain the feature values using the MFCC algorithm. Specific details related thereto will be described below in FIG. 9.

Referring to the above description, the processor 120 may use the artificial intelligence model based on the plurality of processing circuits. For example, the plurality of processing circuits may include the CPU, the GPU, or the NPU. In addition, the electronic device 101 may use the MFCC algorithm based on the CPU.

In operation 635, the processor 120 may obtain information for generating a mouth shape. For example, the processor 120 may obtain the information for generating the mouth shape using an artificial intelligence model. For example, the electronic device 101 may use the artificial intelligence model based on the plurality of processing circuits. For example, the plurality of processing circuits may include the CPU, the GPU, or the NPU.

For example, the information for generating the mouth shape may include at least one of a visual phoneme (viseme), a face landmark, a blend weight, or a face mesh with respect to the voice information. For example, the visual phoneme may represent a mouth shape symbol of an avatar indicating that the voice of the voice information is uttered. For example, the face landmark may represent coordinates of a face of the avatar for indicating that the voice of the voice information is uttered. For example, the face landmark may include three-dimensional coordinates or two-dimensional coordinates. The blend weight may represent an emotion parameter for changing a facial expression of the avatar. For example, the blend weight may be obtained based on a retargeting model. For example, the blend weight may be obtained from the face landmark or the voice information. For example, the face mesh may represent a mesh formed by points of the face landmark. Specific details related thereto will be described below in FIG. 10.

In operation 640, the processor 120 may generate an avatar including the mouth shape. For example, the processor 120 may obtain the avatar having the mouth shape based on the information for generating the mouth shape. For example, the processor 120 may generate an animation including the avatar having the mouth shape. For example, the animation may represent visual information including the virtual environment and the avatar during time corresponding to a plurality of frames. For example, the plurality of frames may be referred to as playback frames set with respect to the animation. The animation may include the avatar having the mouth shape of each of the plurality of frames. The plurality of frames may include key frames of a specified period. For example, the processor 120 may generate the avatar having the mouth shape with respect to each of the plurality of frames, or may generate the avatar having the mouth shape with respect to each of the key frames. Specific details related thereto will be described below in FIG. 11.

In operation 645, the processor 120 may display the avatar. For example the processor 120 may display the generated avatar via the display 510. For example, the processor 120 may display the animation including the avatar via the display 510. In other words the processor 120 may display the avatar or the animation including the avatar via the display 510. Displaying the avatar or the animation may be understood substantially the same as playing the avatar or the animation via the display 510. The processor 120 may change playback speed, delete a portion of contents, or use a parallel processing method in order to minimize a delay time felt by the user (e.g., the user 400). Specific details related thereto will be described below in FIGS. 12A to 12C.

In the operation 650, the processor 120 may identify whether an input signal is a last input signal. For example, the processor 120 may identify whether the first input signal is a last input signal among the plurality of input signals (or the voice information). In the operation 650, when identifying that the first input signal is the last input signal, the processor 120 may perform operation 660. In contrast, in the operation 650, when identifying that another input signal (e.g., a second input signal) other than the first input signal among the plurality of input signals is further included, the processor 120 may perform operation 655. For example, the second input signal may represent an input signal following the first input signal among the plurality of input signals.

In the operation 655, the processor 120 may identify processing speed of at least one processing circuit. For example, the at least one processing circuit may include a processing circuit used to apply the processing algorithm with respect to the first input signal. In the example of the Table 2, the at least one processing circuit may include a GPU as a processing circuit for noise removal, a GPU as a processing circuit for enhancement of a voice part, an NPU as a processing circuit for feature value identification, and an NPU as a processing circuit for mouth shape identification. The processor 120 may identify actual processing speed for each of the processing algorithms of each of the GPU and the NPU with respect to the first input signal. The actual processing speed may be different from the expected processing speed identified in the Table 2. The actual processing speed and the expected processing speed identified based on the reference data may be different from each other. This may be because the expected processing speed is speed at which the reference data is processed, and the actual processing speed is speed at which the voice information is processed, as they process different data. In addition, it may be because a first time point (timing) at which the expected processing speed is measured and a second time point at which the actual processing speed processing the voice information is identified are different from each other. For example, at the first time point, the plurality of processing circuits may not be used. However, at the second time point, a portion of processing circuits among of the plurality of processing circuits may also be used for processing other than processing the voice information. For example, the expected processing speed may be referred to as processing speed predicted based on the reference data.

For example, the processor 120 may update performance of the at least one processing circuit. For example, the processor 120 may store the actual processing speed for processing the first input signal based on the at least one processing circuit. The processor 120 may update the actual processing speed as performance for a processing circuit in which the actual processing speed is measured. Thereafter, the processor 120 may select (or identify) a processing circuit for voice information (e.g., the second input signal) to be obtained in the future among the plurality of processing circuits based on the actual processing speed.

In operation 660, the processor 120 may display an avatar including a mouth shape in a closed state. For example, when identifying that a processed input signal is a last input signal among the plurality of input signals (or the voice information), the processor 120 may display the avatar including the mouth shape in the closed state. In other words, the processor 120 may generate the avatar including the mouth shape in the closed state to be displayed until other voice information different from the voice information is obtained. For example, obtaining the other voice information may include obtaining an input to change an appearance or an operation of the avatar in addition to obtaining the other voice information from the outside.

Referring to the above description, an electronic device and a method optimized for each electronic device for generating an avatar based on real time voice information according to an embodiment of the present disclosure are described. The electronic device and the method according to an embodiment of the present disclosure may quickly and flexibly reduce lip sync even in an internal environment (or an on-device environment) of the electronic device. In other words, the electronic device and the method according to an embodiment of the present disclosure may quickly generate an avatar (or a mouth shape of the avatar, or an animation including the avatar having the mouth shape) with higher accuracy by monitoring resources in the electronic device and using them efficiently. Accordingly, the electronic device and the method according to an embodiment of the present disclosure may provide a more immersive user experience to the user. In addition, the electronic device and the method according to an embodiment of the present disclosure may secure real time performance even in a multi-tasking environment via an optimized computation to generate the avatar having the mouth shape based on voice during runtime of the electronic device. In addition, the electronic device and method according to an embodiment of the present disclosure may reduce overall resource usage by utilizing only resources of the electronic device itself (on-device) and not using resources of a server providing a virtual environment and additional resources (e.g., data) for connection with the server.

FIG. 7 illustrates an example of a delay time between a timing of obtaining voice information and a timing for playing the voice information according to various embodiments.

FIG. 7 illustrates examples 700 and 750 of obtaining, processing, and playing the voice information having different lengths. The example 700 may represent a case in which a specified length of voice information (or an input signal) obtained from the outside is set to 120 ms. The example 750 may represent a case in which a specified length of voice information (or an input signal) obtained from the outside is set to 80 ms. For example, the specified length may be defined as a specified size (e.g., n bytes) or a specified time length. For example, the voice information may be configured with a plurality of input signals. Each of the plurality of input signals may be configured with the specified length. In the examples 700 and 750, for convenience of description, it is assumed an example in which the voice information includes one input signal.

Referring to the example 700, a processor 120 may obtain the voice information having a length of 120 ms. For example, the processor 120 may record the voice information having the length of 120 ms for 120 ms. The processor 120 may process the voice information. For example, the processor 120 may process the voice information having the length of 120 ms for 60 ms. For example, the processor 120 may generate an avatar including a mouth shape with respect to the voice information having the length of 120 ms. Thereafter, the processor 120 may display (or play) the avatar including the mouth shape for the 120 ms. A user of an electronic device 101 may identify a time length 730 between a first timing 710 at which the voice information is inputted and a second timing 720 at which the avatar including the mouth shape with respect to the voice information is played as a delay time. In other words, the time length 730 between the first timing 710 at which the voice information is started to be inputted and the second timing 720 at which the avatar starts to be played may be the delay time.

In contrast, referring to the example 750, the processor 120 may obtain the voice information having a length of 80 ms. For example, the processor 120 may record the voice information having the length of 80 ms for 80 ms. The processor 120 may process the voice information. For example, the processor 120 may process the voice information having the length of 80 ms for 40 ms. For example, the processor 120 may generate an avatar including a mouth shape with respect to the voice information having the length of 80 ms. Thereafter, the processor 120 may display (or play) the avatar including the mouth shape for the 80 ms. The user of the electronic device 101 may identify a time length 780 between a first timing 760 at which the voice information is inputted and a second timing 770 at which the avatar including the mouth shape with respect to the voice information is played as a delay time. In other words, the time length 780 between the first timing 760 at which the voice information is started to be inputted and the second timing 770 at which the avatar starts to be played may be the delay time.

Referring to the above description, when a time for inputting voice information becomes longer or a processing time for generating an avatar including a mouth shape with respect to the inputted voice information becomes longer, a user may feel that a delay time is increased. For example, the processor 120 may set the specified time length based on the delay time between the first timing and the second timing. For example, the specified time length may be identified based on performance (e.g., processing speed) of a processing circuit that processes the voice information (or an input signal) and accuracy of the artificial intelligence model. For example, the performance of the processing circuit may be referred to as performance of an artificial intelligence model that processes the voice information (or the input signal). The processor 120 may set the specified time length for processing one voice information (or input signal) to a minimum length in order to reduce the delay time. However, in a case that the specified time length is shortened, a lag may occur when playing an animation with respect to an entire utterance of the user. In addition, as the specified time length becomes shorter, overhead may occur in a processing circuit to process multiple voice information (or input signals). Therefore, the processor 120 may set an optimal specified time length in order to generate seamless animation without the overhead of the processing circuit while minimizing the delay time. For example, the processor 120 may distinguish the voice information into a plurality of input signals that each input signal has the specified time length.

FIG. 8A illustrates an example of a band pass filter (BPF) for removing noise of voice information according to various embodiments.

FIG. 8A illustrates an example of a graph 800 representing a gain of the voice information according to a frequency to explain an operation of the BPF for noise removal performed in the operation 625 of FIG. 6B. A horizontal axis of the graph 800 may represent a frequency (unit: Hertz (Hz)), and a vertical axis of the graph 800 may represent a gain (unit: decibel (dB)) of the voice information. The graph 800 includes a line 805 representing the gain of the voice information according to the frequency.

Referring to the line 805, a gain of the voice information according to a frequency may have a symmetrical value based on a center frequency f₀. For example, at the center frequency f₀, the gain may be 0 dB, which is a maximum value. For example, at a first frequency f_{H}, the gain may be approximately -3 dB. Alternatively, at a second frequency f_{L}, the gain may be approximately -3 dB. The first frequency f_{H} and the second frequency f_{L} may be referred to as a cutoff frequency. A length 810 between the first frequency f_{H} and the second frequency f_{L} may be referred to as a bandwidth B.

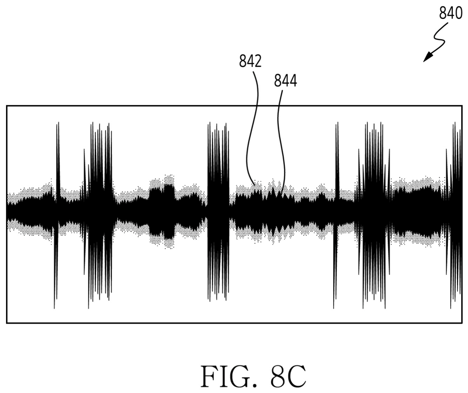

Referring to the above description, a processor 120 may identify (or select) a signal in a frequency region in the length 810 from the voice information using the BPF. For example, the signal in the frequency region in the length 810 may include a voice part included in the voice information. In other words, the frequency region in the length 810 may represent a frequency band with respect to general human voice. The processor 120 may identify a remaining frequency region excluding the frequency region as noise, and may cancel or filter the remaining region excluding the frequency region. Thereafter, the processor 120 may enhance the voice part in the voice information from which the noise has been removed. Specific details related thereto will be described below in FIGS. 8B and 8C.

FIGS. 8B and 8C illustrate examples of a method of enhancing voice from voice information according to various embodiments.

FIGS. 8B and 8C illustrate examples 820 and 840 representing the voice information over time to describe enhancement of a voice part performed in the operation 625 of FIG. 6B.

The example 820 of FIG. 8B illustrates background sound 822 and voice 824 included in the voice information over time. For example, a processor 120 may separate the background sound 822 and the voice 824 included in the voice information. For example, the processor 120 may identify the background sound 822 and the voice 824 included in the voice information, respectively, by using an artificial intelligence model. For example, the processor 120 may identify the background sound 822 and the voice 824 included in the voice information, respectively, by using a computational algorithm (or non-AI model-based).

The example 840 of FIG. 8C illustrates an example of a graph representing amplitudes of the voice information and the voice 824 of the voice information, over time. The example 840 may include a first line 842 representing the amplitude of the voice information obtained by an electronic device 101 (or the processor 120) over time, and a second line 844 representing the amplitude of the voice 824 of the voice information. Referring to the example 840, the first line 842 and the second line 844 may be formed to have similar amplitudes. A difference between the second line 844 and the first line 842 may include a portion other than the voice 824, such as the background sound 822. For example, the processor 120 may separate the background sound 822 and the voice 824 based on the artificial intelligence model or the computational algorithm, and may perform additional processing to enhance quality of the separated voice 824.

Referring to FIGS. 8B and 8C, the processor 120 may separate the background sound 822 and the voice 824 based on the artificial intelligence model or the computational algorithm, and may enhance the voice 824 so as to have an amplitude similar to the voice information. For example, the processor 120 may enhance the voice 824 by using the artificial intelligence model. For example, enhancement based on the artificial intelligence model may be performed based on a central processing unit (CPU), a graphic processing unit (GPU), or a neural processing unit (NPU) among a plurality of processing circuits of the electronic device 101. Alternatively, the processor 120 may enhance the voice 824 by using the computational algorithm. For example, the computational algorithm may include an improved minima controlled recursive averaging (IMCRA) algorithm or a log minimum mean square error (logMMSE) algorithm. For example, enhancement based on the computational algorithm may be performed based on the central processing unit (CPU) among the plurality of processing circuits of the electronic device 101. However, an embodiment of the present disclosure is not limited thereto, and the computational algorithm may include an algorithm capable of enhancing the voice part from the voice information. In other words, the processor 120 may use the artificial intelligence model based on the CPU, the GPU, or the NPU among the plurality of processing circuits, and may use the computational algorithm based on the CPU.

For example, identifying the background sound 822 and the voice 824 by using the artificial intelligence model may require more time compared to using the computational algorithm. Therefore, when a processing circuit having processing speed faster than reference processing speed is used, the processor 120 may identify the background sound 822 and the voice 824 by using the artificial intelligence model. In contrast, when a processing circuit having processing speed slower than the reference processing speed is used, the processor 120 may identify the background sound 822 and the voice 824 by using the computational algorithm.

FIG. 8D illustrates an example of normalizing volume of voice of voice information according to various embodiments.

FIG. 8D illustrates examples 860 and 880 for describing normalization of voice information performed in the operation 625 of FIG. 6B. The normalization may represent adjusting (tuning or changing) volume of voice information (or a voice part (e.g., the voice 824 of FIG. 8B)).

FIG. 8D illustrates an example 860 illustrating volume of the obtained voice information over time, and an example 880 illustrating volume of the normalized voice information over time. The volume may be referred to as an amplitude. Comparing the example 860 and the example 880, an amplitude 870 before being normalized may be a value smaller than an amplitude 890 after being normalized. For example, a processor 120 may increase the amplitude 870 so that the amplitude 870 has a value within a specified range. However, an embodiment of the present disclosure is not limited thereto. For example, when the amplitude 870 has a value larger than the amplitude 890, the processor 120 may decrease the amplitude 870 so that the amplitude 870 has a value within the specified range.

Referring to the above description, the processor 120 may change the volume of the voice information to have a value within a specified range. The specified range may be set to input normalized input information for an artificial intelligence model for processing the voice information. The specified range may be a representative value of volume of the input information. For example, the representative value may include an average value or an intermediate value. When the normalized input information is inputted, the processor 120 may generate a more accurate output by using the artificial intelligence model. In the above-described example, it is exemplified that the specified range is set for the artificial intelligence model, but an embodiment of the present disclosure is not limited thereto. For example, when the voice information has a value within the specified range, quantitative comparison between different voice information is possible, and thus computation may be simplified.

As described above, by normalizing volume of voice information (or an input signal), the electronic device 101 may change the voice information that may be inputted in various environments as though it were obtained under the same condition. Accordingly, the electronic device 101 may more accurately perform feature value identification and mouth shape identification based on the voice information. Specific details of the feature value identification will be described below in FIG. 9.

FIG. 9 illustrates an example of a block diagram for obtaining a feature value of voice information according to various embodiments.

FIG. 9 illustrates an example of a block diagram for obtaining a plurality of feature values performed in the operation 630 of FIG. 6B.

Referring to FIG. 9, a processor 120 may obtain a plurality of feature values based on voice information 910. In an example of FIG. 9, the voice information 910 may be referred to as one input signal. For example, the processor 120 may identify the plurality of feature values using an MFCC 920 (or an MFCC algorithm) based on the voice information 910.

For example, the processor 120 may obtain a spectrum by applying fast-Fourier transform (FFT) with respect to the voice information 910. For example, the processor 120 may obtain the spectrum for a frequency region by applying the FFT with respect to the voice information 910. The processor 120 may obtain a mel spectrum by applying a mel filter bank with respect to the spectrum. For example, the processor 120 may obtain the mel spectrum based on a mel scale representing a relationship between the frequency region and a low frequency band perceived by a real person. The processor 120 may obtain MFCCs by applying a cepstral analysis with respect to the mel spectrum. The MFCCs may be referred to by the feature values. For example, the processor 120 may obtain the feature values, which are a portion of all feature values that are peaks obtained based on the cepstral analysis. The peaks may be referred to as formants. For example, the feature values may be 40 in number. For example, the number of the feature values may be less than 40 or more than 40. For example, the processor 120 may obtain a visual phoneme 930 based on the feature values obtained using the MFCC 920.

For example, the processor 120 may train an artificial intelligence model 940 based on the obtained feature values. In other words, the processor 120 may train the artificial intelligence model 940 using the feature values as inputs. For example, the artificial intelligence model 940 may include a convolution neural network encoder (CNN encoder). Accordingly, the processor 120 may obtain refined feature values. For example, the processor 120 may obtain the visual phoneme 930 based on the refined feature values. In the above-described example, a method in which an electronic device 101 obtains the feature values based on the MFCC algorithm and uses the feature values without additional processing or refines the feature values using the artificial intelligence model 940 is exemplified, but an embodiment of the present disclosure is not limited thereto.

For example, the processor 120 may obtain the feature values without the MFCC algorithm based on the voice information 910 using the artificial intelligence model 940. For example, the processor 120 may obtain the feature values by inputting the voice information 910 into the artificial intelligence model 940. For example, the processor 120 may obtain the visual phoneme 930 based on the feature values obtained using the artificial intelligence model 940.

For example, the visual phoneme 930 of FIG. 9 may be referred to as an example of information for generating a mouth shape. For example, the information for generating the mouth shape may include at least one of a visual phoneme (viseme), a face landmark, a blend weight, or a face mesh with respect to the voice information. For example, the visual phoneme may represent a mouth shape symbol of an avatar indicating that the voice of the voice information is uttered. For example, the face landmark may represent coordinates of a face of the avatar for indicating that the voice of the voice information is uttered. For example, the face landmark may include three-dimensional coordinates or two-dimensional coordinates. The blend weight may represent an emotion parameter for changing a facial expression of the avatar. For example, the blend weight may be obtained based on a retargeting model. For example, the blend weight may be obtained from the face landmark or the voice information. For example, the face mesh may represent a mesh formed by points of the face landmark.

For example, when a processing circuit (e.g., an NPU or a GPU) having relatively high processing speed among the plurality of processing circuits of the electronic device 101 is available, the processor 120 may obtain the feature values using the artificial intelligence model 940. In contrast, when a processing circuit (e.g., a CPU) having relatively low processing speed among the plurality of processing circuits of the electronic device 101 is available, the processor 120 may obtain the feature values using the MFCC algorithm. For example, when a processing circuit having processing speed faster than reference processing speed among the plurality of processing circuits is used, the processor 120 may obtain the feature values by using the artificial intelligence model 940, or may train the artificial intelligence model 940 based on the feature values obtained using the MFCC 920. In contrast, when a processing circuit having processing speed slower than the reference processing speed among the plurality of processing circuits is used, the processor 120 may obtain the feature values by using the MFCC 920. For example, the processor 120 may use the artificial intelligence model 940 based on the plurality of processing circuits. For example, the plurality of processing circuits may include the CPU, the GPU, or the NPU. In addition, the processor 120 may use the MFCC 920 based on the CPU.

Referring to the above description, an electronic device and a method according to an embodiment of the present disclosure may use the MFCC 920 and/or the artificial intelligence model 940 to identify feature values. In a case of identifying the feature value using the artificial intelligence model 940, the feature value may be obtained via an artificial intelligence model network without using an additional module (e.g., a module for the MFCC 920), and an additionally required preprocessing process may be reduced. However, as described above, when processing speed of a processing circuit currently available by the processor 120 is slower than the reference processing speed, the processor 120 may use the MFCC 920 for rapid processing of voice information without using the artificial intelligence model 940.

FIG. 10 illustrates an example of a method of obtaining information for generating a mouth shape based on voice information according to various embodiments.

Referring to FIG. 10, examples 1000 and 1050 of information for generating the mouth shape obtained in the operation 635 of FIG. 6B are illustrated.

Referring to the example 1000, a processor 120 may identify a face landmark 1010 identified based on feature values. For example, the feature values may be obtained from the voice information based on the MFCC 920 or the artificial intelligence model 940 of FIG. 9. For example, based on a processing circuit identified based on processing speed among a plurality of processing circuits, the processor 120 may identify the face landmark 1010 from the feature values using an artificial intelligence model. For example, the face landmark 1010 may represent coordinates with respect to a face of an avatar to indicate that the voice of the voice information is uttered. In the example 1000 of FIG. 10, the face landmark 1010, which is two-dimensional coordinates, is exemplified, but an embodiment of the present disclosure is not limited thereto. For example, the face landmark 1010 may be configured with three-dimensional coordinates.

Referring to the example 1050, the processor 120 may identify a face mesh 1060 identified based on the feature values. For example, the processor 120 may identify the face mesh 1060 based on the face landmark 1010 identified from the feature values in the example 1000. For example, the face mesh 1060 may represent a mesh formed by points of the face landmark 1010. For example, the processor 120 may generate a visual object representing a mouth shape with respect to the voice information, based on the face mesh 1060. The visual object may represent a visual object for representing a mouth portion of an avatar corresponding to a user of an electronic device 101 (or an external electronic device 580). For example, the processor 120 may generate the avatar having (or including) the mouth shape by synthesizing the mouth portion of the avatar with the visual object.

Referring to the above description, by using the artificial intelligence model, the processor 120 may generate the face landmark 1010 based on the feature values and generate the face mesh 1060 based on the face landmark 1010. The processor 120 may generate the visual object representing the mouth shape based on the face mesh 1060. However, an embodiment of the present disclosure is not limited thereto.

For example, by using the artificial intelligence model, the processor 120 may obtain a visual phoneme (viseme) based on the feature values. For example, by using the artificial intelligence model, the processor 120 may obtain the visual phoneme, which is a mouth shape symbol representing voice of the voice information, based on the feature values obtained from the voice information. For example, the visual phoneme may be mapped to a specified value (hereinafter, a first value). The processor 120 may identify a blend weight based on the visual phoneme. For example, the blend weight may be mapped to a specified value (hereinafter, a second value). The processor 120 may obtain the blend weight from the visual phoneme using a mapping table between the first value and the second value. For example, the processor 120 may obtain the face mesh 1060 by applying the blend weight.

Alternatively, by using the artificial intelligence model, the processor 120 may obtain the face landmark 1010 based on the feature values. For example, by using the artificial intelligence model, the processor 120 may obtain the face landmark 1010 representing voice of the voice information, based on the feature values obtained from the voice information. For example, the face landmark 1010 may include three-dimensional coordinates or two-dimensional coordinates. For example, the processor 120 may obtain the face mesh 1060 from the face landmark 1010. For example, by using a retargeting model, the processor 120 may obtain the face mesh 1060 from the face landmark 1010. The retargeting model may represent a model for adjusting the face mesh 1060 using the face landmark 1010.

Alternatively, by using the artificial intelligence model, the processor 120 may obtain a blend weight based on the feature values. For example, by using the artificial intelligence model, the processor 120 may obtain a blend weight, which is a value for generating a mouth shape for representing voice of the voice information, based on the feature values obtained from the voice information. For example, the blend weight may represent a value mapped according to a shape of a mouth of an avatar. For example, the blend weight may represent values mapped to factors for forming a mouth shape such as corners of the mouth, a middle part of the mouth, lip wrinkles, or lip curvature. For example, by changing the mapped value, shapes of the corners of the mouth may be changed. For example, the processor 120 may obtain the face mesh 1060 based on the blend weight.

Alternatively, by using the artificial intelligence model, the processor 120 may obtain the face mesh 1060 based on the feature values obtained from the voice information. For example, the face mesh 1060 may be an output of the artificial intelligence model using the feature values as an input. Alternatively, by using the artificial intelligence model, the processor 120 may the face mesh 1060 from the voice information. In other words, the processor 120 may omit a process of identifying the feature values and may obtain the face mesh 1060 from the obtained voice information.

Using the artificial intelligence model may indicate that the processor 120 inputs information into the artificial intelligence model and obtains output by using a processing circuit identified based on processing speed among the plurality of processing circuits. For example, the plurality of processing circuits may include an NPU, a GPU, or a CPU. The artificial intelligence model may represent an artificial intelligence model trained by voice information processed via the operation 625 or the operation 630.

For example, the processor 120 may generate the visual object representing the mouth shape based on the obtained face mesh 1060. For example, the processor 120 may generate an avatar (or an animation) in which the visual object is synthesized. Specific details of a method of generating the avatar (or the animation) will be described below in FIG. 11.

FIG. 11 illustrates examples of a method of generating an animation for an avatar including a mouth shape according to various embodiments.

FIG. 11 illustrates examples 1100, 1150, and 1155 of a method of generating an avatar performed in the operation 640 of FIG. 6B.

Referring to FIG. 11, a processor 120 may generate the avatar including a mouth shape generated based on information for generating the mouth shape. For example, the processor 120 may generate a visual object representing the mouth shape based on the information for generating the mouth shape. The processor 120 may generate the avatar in which the visual object is synthesized. For example, the processor 120 may generate an animation with respect to the avatar. For example, the animation may represent visual information including the virtual environment and the avatar during a time corresponding to a plurality of frames. For example, the plurality of frames may be referred to as playback frames set with respect to the animation. The animation may include the avatar having the mouth shape of each of the plurality of frames. The plurality of frames may include key frames of a specified period. For example, the processor 120 may generate an avatar having the mouth shape with respect to each of the plurality of frames, or an avatar having the mouth shape with respect to each of the key frames.

FIG. 11 illustrates the example 1100 of a method of generating the avatar having the mouth shape with respect to each of the plurality of frames and the examples 1150 and 1155 of a method of generating the avatar having the mouth shape with respect to each of the key frames. It is exemplified that the plurality of frames of FIG. 11 include 10 frames, but an embodiment of the present disclosure is not limited thereto. For example, the plurality of frames may include 9 or less or 11 or more frames.

Referring to the example 1100, the processor 120 may generate an avatar with respect to each of the plurality of frames. For example, the processor 120 may identify the plurality of frames configuring a specified time length with respect to the voice information (or an input signal). For example, with respect to each of the plurality of frames, the processor 120 may identify a visual object representing a mouth shape and generate the avatar in which the identified visual object is synthesized.

In contrast, referring to the example 1150, the processor 120 may generate an avatar with respect to each of the key frames, which are some frames among the plurality of frames. For example, the processor 120 may identify key frames 1161, 1164, and 1167 of a specified period among the plurality of frames with respect to the voice information (or the input signal). The specified period may be three frames. For example, with respect to each of the key frames 1161, 1164, and 1167, the processor 120 may identify a visual object representing a mouth shape and generate the avatar in which the identified visual object is synthesized.

Referring to the example 1155, the processor 120 may generate the avatar with respect to other frames 1162, 1165, and 1168, based on the avatar generated with respect to the key frames 1161, 1164, and 1167. For example, the processor 120 may identify a visual object representing a mouth shape of the frames 1162 for changing from the avatar of the key frame 1161 to the avatar of the key frame 1164, and generate the avatar in which the identified visual object is synthesized. In addition, for example, the processor 120 may identify a visual object representing a mouth shape of the frames 1165 for changing from the avatar of the key frame 1164 to the avatar of the key frame 1167, and generate the avatar in which the identified visual object is synthesized. In addition, for example, the processor 120 may identify a visual object representing a mouth shape of the frames 1168 for changing from the avatar of the key frame 1167 to an avatar of a last frame 1169, and generate the avatar in which the identified visual object is synthesized. The avatar of the last frame 1169 may be an avatar in which a visual object representing a mouth shape in a closed state is synthesized. For example, the last frame 1169 may be a time interval including a time point (timing) when the voice information ends. For example, the processor 120 may use Bezier curves or interpolation to generate the avatars of the other frames 1162, 1165, and 1168 between key frames based on the key frames 1161, 1164, and 1167. The Bezier curves and the interpolation are merely examples of a method for estimating remaining frames based on some known frames among the plurality of frames, and an embodiment of the present disclosure is not limited thereto.

FIGS. 12A to 12C illustrate examples of a method of playing an animation for an avatar including a mouth shape according to various embodiments.

FIGS. 12A to 12C illustrate examples 1200, 1210, 1220, and 1240 of a method of displaying an avatar (or an animation including the avatar) performed in the operation 645 of FIG. 6B. In order for a user to recognize that the avatar in a virtual environment is reflected in real time, a mouth of the avatar needs to be opened quickly when the user utters, and the mouth of the avatar needs to be closed quickly when the user ends the utterance. At this time, it may be limited to reduce time for processing (e.g., voice enhancement, feature value identification, and mouth shape identification) voice information uttered by the user. An electronic device and a method according to an embodiment of the present disclosure may reduce a delay time based on a method of playing an avatar including a generated mouth shape (or an animation including the avatar). The playback may include continuously displaying the avatar with respect to time. For example, a processor 120 may play the animation for the avatar.

Referring to FIG. 12A, the example 1200 of playing an avatar (or an animation) having a time length different from recorded voice information and the example 1210 of changing playback speed are illustrated.

Referring to the example 1200, the processor 120 may obtain voice information #A 1201, voice information #B 1202, voice information #C 1203, and voice information #D 1204. For example, the processor 120 may record the voice information #A 1201, the voice information #B 1202, the voice information #C 1203, and the voice information #D 1204 over time. It is assumed that a time length of each of the voice information #A 1201, the voice information #B 1202, the voice information #C 1203, and the voice information #D 1204 is 10 ms. For example, the processor 120 may start processing 1205 for the voice information #A 1201 at a time point (timing) of obtaining the voice information #B 1202. The processor 120 may start processing 1206 for the voice information #B 1202 at a time point (timing) of obtaining the voice information #C 1203. For example, it is assumed that a time length required for the processing 1205 for the voice information #A 1201 and the processing 1206 for the voice information #B 1202 is 8 ms. For example, the processor 120 may start playback 1207 from a time point (timing) when the processing 1205 for the processed voice information #A 1201 ends. For example, the playback 1207 for the voice information #A 1201 may be extended longer than the time length (10 ms) of the voice information #A 1201. For example, the playback 1207 may be performed for 12 ms extended by a time length 1208. For example, the time length 1208 may be 2 ms. The increase in a time length of the playback 1207 may occur as playback speed (or rendering speed) slows down as the processor 120 processes another computation. In this case, as the time length of playback 1207 increases, the voice information #B 1202 may not be played even though the processing 1206 for the voice information #B 1202 is completed. Accordingly, a delay time with respect to the voice information #B 1202 may be longer by the time length 1208.

Referring to the example 1210, the processor 120 may obtain voice information #A 1211, voice information #B 1212, voice information #C 1213, and voice information #D 1214. For example, the processor 120 may record the voice information #A 1211, the voice information #B 1212, the voice information #C 1213, and the voice information #D 1214 over time. It is assumed that a time length of each of the voice information #A 1211, the voice information #B 1212, the voice information #C 1213, and the voice information #D 1214 is 10 ms. For example, the processor 120 may start processing 1215 for the voice information #A 1211 at a time point (timing) of obtaining the voice information #B 1212. The processor 120 may start processing 1216 for the voice information #B 1212 at a time point (timing) of obtaining the voice information #C 1213. For example, it is assumed that a time length required for the processing 1215 for the voice information #A 1211 and the processing 1216 for the voice information #B 1212 is 8 ms. For example, the processor 120 may start playback 1217 from a time point (timing) when the processing 1215 for the processed voice information #A 1211 ends. For example, the playback 1217 for the voice information #A 1211 may be extended longer than the time length (10 ms) of the voice information #A 1211. For example, a time for the playback 1217 may be performed for 12 ms extended by a time length 1218. However, unlike the example 1200, the processor 120 may adjust the time for the playback 1217 to correspond to the time length (10 ms) of the voice information #A 1211 by changing playback speed with respect to the playback 1217. For example, the processor 120 may shorten the time for the playback 1217 by relatively quickly changing the playback speed with respect to the playback 1217. Accordingly, a delay time with respect to the voice information #B 1212 may not be delayed by the time length 1218. For example, the processor 120 may start playback 1219 immediately after the processing 1216 for the voice information #B 1212 ends.

Referring to the above description, the processor 120 may process obtained voice information and play (or display) an avatar (or an animation) having a mouth shape with respect to the voice information. At this time, the processor 120 may change speed (or playback speed) of playing the avatar. Accordingly, a delay time experienced by a user may be reduced.

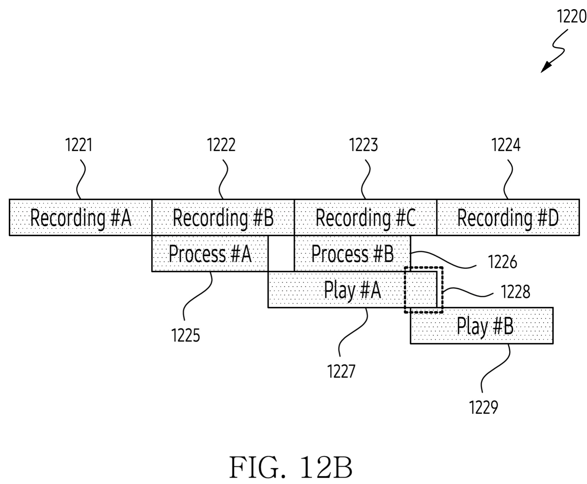

Referring to FIG. 12B, an example 1220 in which an avatar (or an animation) having a time length different from recorded voice information is partially ignored and an avatar (or an animation) with respect to next voice information of the voice information is played is illustrated.

Referring to the example 1220, the processor 120 may obtain voice information #A 1221, voice information #B 1222, voice information #C 1223, and voice information #D 1224. For example, the processor 120 may record the voice information #A 1221, the voice information #B 1222, the voice information #C 1223, and the voice information #D 1224 over time. It is assumed that a time length of each of the voice information #A 1221, the voice information #B 1222, the voice information #C 1223, and the voice information #D 1224 is 10 ms. For example, the processor 120 may start processing 1225 for the voice information #A 1221 at a time point (timing) of obtaining the voice information #B 1222. The processor 120 may start processing 1226 for the voice information #B 1222 at a time point (timing) of obtaining the voice information #C 1223. For example, it is assumed that a time length required for the processing 1225 for the voice information #A 1221 and the processing 1226 for the voice information #B 1222 is 8 ms. For example, the processor 120 may start playback 1227 from a time point (timing) when the processing 1225 for the processed voice information #A 1221 ends. For example, the playback 1227 for the voice information #A 1221 may be extended longer than the time length (10 ms) of the voice information #A 1221. For example, the playback 1227 may be performed for 12 ms extended by a time length 1228. For example, the time length 1228 may be 2 ms. The increase in a time length of the playback 1227 may occur as playback speed (or rendering speed) slows down as the processor 120 processes another computation. Unlike the example 1200 of FIG. 12A, the processor 120 may ignore a portion for the time length 1228 during the playback 1227 for the voice information #A 1221 extended by the time length 1228, and may start playback 1229 for the voice information #B 1222. For example, the playback 1229 for the voice information #B 1222 may start immediately at a time point when the processing 1226 for the voice information #B 1222 ends. For example, ignoring the portion for the time length 1228 during the playback 1227 may include stopping the playback 1227 at a time point when the portion for the time length 1228 starts within an interval of the playback 1227. Accordingly, a delay time for the voice information #B 1222 may not be delayed by the time length 1228.

Referring to the above description, the processor 120 may process obtained voice information and play (or display) an avatar (or an animation) having a mouth shape with respect to the voice information. At this time, the processor 120 may stop playback of an avatar having a mouth shape with respect to previous voice information and perform playback of an avatar having a mouth shape with respect to next voice information. In other words, a content for playback of the avatar having the mouth shape with respect to the previous voice information may be partially deleted. Accordingly, a delay time experienced by the user may be reduced.

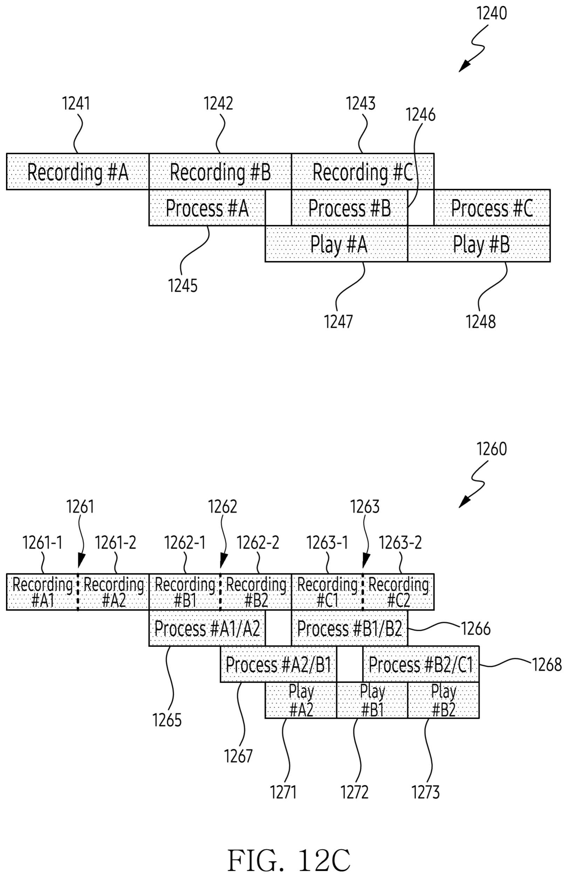

Referring to FIG. 12C, an example 1240 of playing an avatar generated by processing recorded voice information via a serial processing method and an example 1260 of playing an avatar generated by processing via a parallel processing method are illustrated.

Referring to the example 1240, the processor 120 may obtain the voice information #A 1241, the voice information #B 1242, and the voice information #C 1243. For example, the processor 120 may record the voice information #A 1241, the voice information #B 1242, and the voice information #C 1243 over time. It is assumed that a time length of each of the voice information #A 1241, the voice information #B 1242, and the voice information #C 1243 is 10 ms. For example, the processor 120 may start processing 1245 for the voice information #A 1241 at a time point (timing) of obtaining the voice information #B 1242. The processor 120 may start processing 1246 for the voice information #B 1242 at a time point (timing) of obtaining the voice information #C 1243. For example, it is assumed that a time length required for the processing 1245 for the voice information #A 1241 and the processing 1246 for the voice information #B 1242 is 8 ms. For example, the processor 120 may start playback 1247 from a time point (timing) when the processing 1245 for the processed voice information #A 1241 ends. In this case, a delay time for the voice information #A 1241 experienced by the user may be 18 ms (10 ms+8 ms).

Referring to the example 1260, the processor 120 may obtain voice information #A 1261, voice information #B 1262, and voice information #C 1263. For example, the processor 120 may record the voice information #A 1261, the voice information #B 1262, and the voice information #C 1263 over time. It is assumed that a time length of each of the voice information #A 1261, the voice information #B 1262, and the voice information #C 1263 is 10 ms. For example, first 5 ms of the voice information #A 1261 may be referred to as a first portion 1261-1 #A1, and last 5 ms may be referred to as a second portion 1261-2 #A2. First 5 ms of the voice information #B 1262 may be referred to as a first portion 1262-1 #B1, and last 5 ms may be referred to as a second portion 1262-2 #B2. First 5 ms of the voice information #C 1263 may be referred to as a first portion 1263-1 #C1, and last 5 ms may be referred to as a second portion 1263-2 #C2.

For example, the processor 120 may start processing 1265 for the first portion 1261-1 #A1 and the second portion 1261-2 #A2 of the voice information #A 1261 at a time point (timing) of obtaining the voice information #B 1262. The processor 120 may start processing 1267 for the second portion 1261-2 #A2 of the voice information #A 1261 and the first portion 1262-1 #B1 of the voice information #B 1262 at a time point (timing) of obtaining the second portion 1262-2 #B2 of the voice information #B 1262. The processor 120 may start processing 1266 for the first portion 1262-1 #B1 and the second portion 1262-2 #B2 of the voice information #B 1262 at a time point (timing) of obtaining the first portion 1263-1 #C1 of the voice information #C 1263. The processor 120 may start processing 1268 for the second portion 1262-2 #B2 of the voice information #B 1262 and the first portion 1263-1 #C1 of the voice information #C 1263 at a time point (timing) of obtaining the second portion 1263-2 #C2 of the voice information #C 1263. For example, it is assumed that a time length required for processing a first portion and a second portion of voice information is 8 ms.

For example, the processor 120 may start playback 1271 for the second portion 1261-2 #A2 of the voice information #A 1261 from a time point (timing) when the processing 1265 for the first portion 1261-1 #A1 and the second portion 1261-2 #A2 of the processed voice information #A 1261 ends. In other words, the processor 120 may skip playback of the first portion 1261-1 #A1 of the processed voice information #A 1261 and perform the playback 1271 for the second portion 1261-2 #A2 of the voice information #A 1261. In this case, a delay time for the voice information #A 1261 experienced by the user may be 13 ms (5 ms+8 ms). An avatar (or an animation) having a mouth shape with respect to a front portion (e.g., the first portion 1261-1 #A1 of the voice information #A 1261) uttered by the user may have a lower necessity to be recognized compared to a rear portion (e.g., the second portion 1261-2 #A2 of the voice information #A 1261). This may be because the rear portion is scheduled to proceed continuously after the front portion. Therefore, by skipping playback of the front portion and performing playback only for the rear portion, a delay time experienced by the user may be reduced.

Referring to the above description, the processor 120 may process voice information in parallel by overlapping time. For example, the processor 120 may perform parallel processing for the voice information via one processing circuit identified based on processing speed. For example, the processor 120 may perform the parallel processing by using a plurality of threads of the one processing circuit. However, an embodiment of the present disclosure is not limited thereto. For example, the processor 120 may perform the parallel processing for the voice information by using the one processing circuit identified based on the processing speed together with another processing circuit. The other processing circuit may have the same type as or a different type from the one processing circuit. For example, when the other processing circuit has the same type as the one processing circuit, the processing speed may correspond. For example, when the other processing circuit is different from the one processing circuit, the processing speed may correspond or may be different. In addition, in FIG. 12C, an example of parallel processing with two is illustrated, but an embodiment of the present disclosure is not limited thereto. For example, the processor 120 may perform three or more parallel processing. When the number of parallel processing increases, a delay time may be reduced.

In FIGS. 12A to 12C, different voice information (e.g., voice information #A, voice information #B, and voice information #C) is illustrated for convenience of description, but an embodiment of the present disclosure is not limited thereto. The different voice information may be different input signals. In other words, the method of FIGS. 12A to 12C may also be applied to a plurality of input signals in one voice information.

FIG. 13 illustrates an example of a flowchart of a method of applying a specified mouth shape to an avatar including a mouth shape in a closed state according to various embodiments.

At least a portion of the method of FIG. 13 may be performed by the electronic device 101 of FIG. 5. For example, at least a portion of the method may be controlled by the processor 120 of the electronic device 101. The method of FIG. 13 may include exemplary operations for the operation 620 to the operation 625 of FIG. 6B.

Although not illustrated in FIG. 13, before performing operation 1310, the processor 120 may obtain voice information from the outside and identify whether the voice information includes voice. For example, the processor 120 may display the avatar corresponding to a user of the electronic device 101 in response to execution of an software application providing the virtual environment. For example, the processor 120 may obtain voice information from the outside in the state. For example, the processor 120 may distinguish the obtained voice information into a plurality of input signals. For example, each of the plurality of input signals may have a specified time length. The processor 120 may sequentially perform processing for each of the plurality of input signals. For example, the processor 120 may perform processing in an order from a first input signal to a last input signal among the plurality of input signals. For example, the processor 120 may identify whether one identified input signal among the plurality of input signals includes voice. In the example, it is described that the voice information includes the plurality of input signals, but an embodiment of the present disclosure is not limited thereto. For example, when a time length of the voice information corresponds to the specified time length, the voice information may be configured with one input signal.

In the operation 1310, the processor 120 may identify whether a mouth of the avatar is in a closed state. For example, in response to identifying that the input signal includes voice, the processor 120 may identify whether a mouth of the currently displayed avatar is in a closed state. For example, the processor 120 may identify whether another input signal existed before processing the input signal. The processor 120 may identify whether an avatar with respect to other voice information prior to voice information including the input signal is being displayed, or whether the input signal is a first input signal in the voice information. In operation 1310, when the mouth of the avatar is in the closed state, the processor 120 may perform operation 1320. In contrast, in the operation 1320, when the mouth of the avatar is in the open state, the processor 120 may perform operation 1340.

In the operation 1320, the processor 120 may identify a specified mouth shape based on volume of voice. For example, the processor 120 may identify volume of the input signal. For example, the processor 120 may identify a specified mouth shape based on the volume of the input signal. For example, information on the specified mouth shape may be stored in memory 130. The information on the specified mouth shape may be mapped according to the volume of the input signal. For example, the specified mouth shape may include a mouth shape for uttering "schwa". When the volume of the input signal is a first value, a first mouth shape for uttering the "schwa" may be identified. When the volume of the input signal is a second value greater than the first value, a second mouth shape for uttering the "schwa" may be identified. The second mouth shape may have a shape in which a mouth is opened more than the first mouth shape. However, an embodiment of the present disclosure is not limited thereto. For example, the specified mouth shape may include a mouth shape for uttering a syllable other than "schwa".

In operation 1330, the processor 120 may display an avatar including the specified mouth shape. For example, the processor 120 may synthesize the specified mouth shape with the avatar having the mouth in the closed state that is being displayed via a display 510 of the electronic device 101. Accordingly, the processor 120 may generate an avatar including the specified mouth shape. For example, the processor 120 may generate an animation continuously including the avatar having the mouth in the closed state and the avatar including the specified mouth shape. For example, the processor 120 may display the avatar (or the animation) including the specified mouth shape via the display 510.

In the operation 1340, the processor 120 may perform voice enhancement. For example, the processor 120 may perform the voice enhancement with respect to the input signal. Specific details of the operation 1340 are substantially the same as the operation 625 of FIG. 6B and thus are omitted.

Referring to the above description, an electronic device and a method according to an embodiment of the present disclosure may display an avatar (or an animation) including a specified mouth shape based on volume of voice, until before a time point (timing) when processing of the uttered voice is completed and an avatar is played, from a time point (timing) when the user utters. Accordingly, the electronic device and the method according to an embodiment of the present disclosure may provide a sense of match for a mouth opening motion, by providing an avatar that does not match voice uttered by the user but includes a mouth in an open state during a short time (e.g., less than 1 second) from the utterance timing until before the avatar is played. By using the electronic device and the method according to an embodiment of the present disclosure, the user may experience a short delay time.

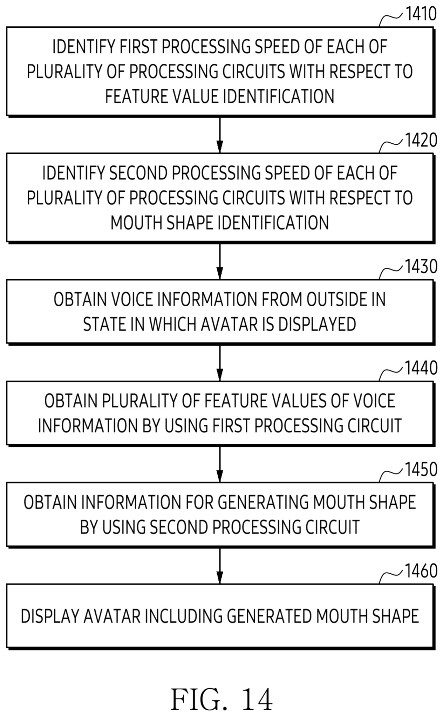

FIG. 14 illustrates an example of a flowchart of a method of identifying a mouth shape of an avatar based on performance of a plurality of processing circuits according to various embodiments.

At least a portion of the method of FIG. 14 may be performed by the electronic device 101 of FIG. 5. For example, at least a portion of the method may be controlled by the processor 120 of the electronic device 101.

Referring to FIG. 14, in operation 1410, the processor 120 may identify first processing speed of each of a plurality of processing circuits with respect to feature value identification. For example, with respect to the feature value identification of voice data, the processor 120 may identify the first processing speed of each of the plurality of processing circuits for processing the voice data. For example, the plurality of processing circuits may include a central processing unit (CPU), a graphic processing unit (GPU), or a neural processing unit (NPU). For example, the processor 120 may include the CPU. The voice data may be referred to as voice information.

In operation 1420, the processor 120 may identify second processing speed of each of the plurality of processing circuits with respect to mouth shape identification. For example, the processor 120 may identify the second processing speed of each of the plurality of processing circuits for processing the voice data with respect to the mouth shape identification of the voice data. The mouth shape identification may be performed in conjunction with the feature value identification. For example, the mouth shape identification may be performed based on feature values identified via the feature value identification.

In FIG. 14, an example of identifying the first processing speed and the second processing speed has been described, but is merely an example for convenience of description, and an embodiment of the present disclosure is not limited thereto. For example, the processor 120 may identify third processing speed of each of the plurality of processing circuits with respect to voice part enhancement.

For example, the first processing speed may be identified by performing the feature value identification based on reference data in each of the plurality of processing circuits. For example, the second processing speed may be identified by performing the mouth shape identification based on reference data in each of the plurality of processing circuits. For example, the third processing speed may be identified by performing the voice part enhancement based on reference data in each of the plurality of processing circuits. The reference data may represent dummy data for identifying the performance of each of the plurality of processing circuits. For example, each of the first processing speed, the second processing speed, and the third processing speed may be defined as a ratio of processing time to a time length of inputted data (e.g., a length of the reference data). For example, the ratio may be referred to as a real time ratio (RT). For example, the first processing speed may include processing speed of a CPU that performs the feature value identification using an artificial model, processing speed of an NPU that performs the feature value identification using the artificial model, processing speed of a GPU that performs the feature value identification using the artificial model, or processing speed of a CPU that performs the feature value identification using a mel frequency cepstral coefficient (MFCC) algorithm.

In operation 1430, the processor 120 may obtain voice information from the outside in a state in which an avatar is displayed. For example, the avatar may represent a virtual object corresponding to a user in a virtual environment. For example, the virtual environment may be provided by a software application. For example, the processor 120 may display the virtual environment and the avatar in the virtual environment in response to executing the software application. For example, the processor 120 may obtain the voice information from outside the electronic device 101 in a state in which the avatar is displayed. The voice information may be referred to as voice data. For example, the voice information may include voice, noise, or background sound.

For example, the voice information may be transmitted from an external electronic device 580 via a server or a system for providing the virtual environment. For example, the voice information may be obtained via a microphone of the electronic device 101 as the user of the electronic device 101 utters. For example, the voice information may include a text input to the electronic device 101 or the external electronic device 580. For example, the text input may include machine-synthesized voice such as text to speech (TTS). For example, the voice information may be configured with an entire utterance, a sentence, a word, or a specified length of the user of the electronic device 101 or another user of the external electronic device 580. For example, the specified length may be defined as a specified size (e.g., n bytes) or a specified time length. For example, the voice information may be configured with a plurality of input signals. Each of the plurality of input signals may be configured with the specified length.

In operation 1440, the processor 120 may obtain a plurality of feature values of the voice information by using a first processing circuit. For example, the processor 120 may identify the first processing circuit among the plurality of processing circuits based on the first processing speed. For example, the first processing circuit may include a circuit with the highest first processing speed among the plurality of processing circuits with respect to the feature value identification. For example, the processor 120 may perform the feature value identification with respect to the voice information based on the first processing circuit.

For example, the processor 120 may extract the feature values from the voice information, which is an analog signal. For example, the processor 120 may obtain the feature values based on a mel frequency cepstral coefficient (MFCC) algorithm. For example, the processor 120 may obtain a spectrum by applying fast-Fourier transform (FFT) for each frame with respect to the voice information. For example, the processor 120 may obtain the spectrum for a frequency region by applying the FFT with respect to the voice information. The processor 120 may obtain a mel spectrum by applying a mel filter bank with respect to the spectrum. For example, the processor 120 may obtain the mel spectrum based on a mel scale representing a relationship between the frequency region and a low frequency band perceived by a real person. The processor 120 may obtain MFCCs by applying a cepstral analysis with respect to the mel spectrum. The MFCCs may be referred to by the feature values. For example, the processor 120 may obtain the feature values, which are a portion of all feature values that are peaks obtained based on the cepstral analysis. The peaks may be referred to as formants. For example, the feature values may be 40 in number. However, an embodiment of the present disclosure is not limited thereto. For example, the number of the feature values may be less than 40 or more than 40.

For example, the processor 120 may train the artificial intelligence model based on the obtained feature values. In other words, the processor 120 may train the artificial intelligence model using the feature values as inputs. Accordingly, the processor 120 may obtain refined feature values. In the above-described example, a method in which the processor 120 obtains the feature values based on the MFCC algorithm and uses the feature values without additional processing or refines the feature values using the artificial intelligence model is exemplified, but an embodiment of the present disclosure is not limited thereto.

For example, the processor 120 may obtain the feature values without the MFCC algorithm based on the voice information using the artificial intelligence model. For example, when a processing circuit having relatively high processing speed (e.g., the NPU or the GPU) among the plurality of processing circuits of the processor 120 is available, the processor 120 may obtain the feature values using the artificial intelligence model. In contrast, when a processing circuit having relatively low processing speed (e.g., the CPU) among the plurality of processing circuits of the processor 120 is available, the processor 120 may obtain the feature values using the MFCC algorithm.

As described above, the processor 120 may identify the plurality of feature values based on the feature value identification performed using the MFCC algorithm and/or the artificial intelligence model based on the first processing circuit. For example, the first processing circuit may include a CPU that may use the MFCC algorithm or the artificial intelligence model. For example, the first processing circuit may include a GPU that may use the artificial intelligence model. For example, the first processing circuit may include an NPU that may use the artificial intelligence model.

Although not illustrated in FIG. 14, the processor 120 may perform voice enhancement before the operation 1440 is performed. For example, the voice enhancement may include removing noise of the voice information, enhancing a voice part of the voice information, and normalizing volume of the voice part.

In operation 1450, the processor 120 may obtain information for generating a mouth shape by using a second processing circuit. For example, the processor 120 may identify the second processing circuit among the plurality of processing circuits based on the second processing speed. For example, the second processing circuit may include a circuit with the highest second processing speed among the plurality of processing circuits with respect to the mouth shape identification. For example, the processor 120 may perform the mouth shape identification with respect to the voice information based on the second processing circuit.

For example, by using the second processing circuit, the processor 120 may obtain information for generating the mouth shape based on the plurality of feature values. The mouth shape may include visual information indicating that voice of the voice information is uttered.

For example, the information for generating the mouth shape may include at least one of a visual phoneme (viseme), a face landmark, a blend weight, or a face mesh with respect to the voice information. For example, the visual phoneme may represent a mouth shape symbol of an avatar indicating that the voice of the voice information is uttered. For example, the face landmark may represent coordinates of a face of the avatar for indicating that the voice of the voice information is uttered. For example, the face landmark may include three-dimensional coordinates or two-dimensional coordinates. The blend weight may represent an emotion parameter for changing a facial expression of the avatar. For example, the blend weight may be obtained based on a retargeting model. For example, the blend weight may be obtained from the face landmark or the voice information. For example, the face mesh may represent a mesh formed by points of the face landmark.

For example, the processor 120 may obtain the information for generating the mouth shape by using the artificial intelligence model. For example, the processor 120 may use the artificial intelligence model based on the second processing circuit. For example, the second processing circuit may be one of the CPU, the GPU, and the NPU.

In operation 1460, the processor 120 may display an avatar including the generated mouth shape. For example, the processor 120 may generate the avatar including the mouth shape generated based on the information for generating the mouth shape. For example, the processor 120 may generate an animation including the avatar having the mouth shape. For example, the animation may represent visual information including the virtual environment and the avatar during time corresponding to a plurality of frames. For example, the plurality of frames may be referred to as playback frames set with respect to the animation. The animation may include the avatar having the mouth shape of each of the plurality of frames. The plurality of frames may include key frames of a specified period. For example, the processor 120 may generate the avatar having the mouth shape with respect to each of the plurality of frames, or may generate the avatar having the mouth shape with respect to each of the key frames.

For example, the processor 120 may play the avatar or the animation via a display 510. At this time, the processor 120 may change playback speed, delete a portion of contents, or use a parallel processing method in order to minimize a delay time felt by the user.

Although not illustrated in FIG. 14, the processor 120 may identify, before displaying the avatar including the mouth shape generated with respect to the voice information, whether a mouth of a currently displayed avatar is in a closed state. For example, the currently displayed avatar may be displayed as the processor 120 executes the software application that provides the virtual environment. "Before displaying the avatar" may include time before the processor 120 performs processing on the obtained voice information after obtaining the voice information. For example, when the mouth is in the closed state, the processor 120 may display the avatar having a specified mouth shape based on volume of the voice information via the display 510. In other words, when the currently displayed avatar does not open the mouth and the voice information that the user utters is obtained, the avatar having the specified mouth shape based on the volume of the voice information may be displayed in order to reduce a delay that the user may experience.

Referring to FIGS. 1 to 14, an electronic device and a method according to an embodiment of the present disclosure may provide a video call service via an avatar having a mouth shape generated based on voice information in an environment in which a video call using a camera is impossible. In addition, the electronic device and the method according to an embodiment of the present disclosure may be applied not only to user equipment such as a smartphone, but also to a wearable device (e.g., the wearable devices 101-1) such as an HMD. In a case of using the wearable device, there may be a limitation in directly obtaining information on a face of a user. Accordingly, the electronic device and the method according to an embodiment of the present disclosure may provide a virtual environment service via the avatar having the mouth shape generated based on the voice information. The electronic device and the method according to an embodiment of the present disclosure may identify an optimal processing algorithm and a processing circuit for processing the processing algorithm, for body gesture or emotion estimation as well as the mouth shape from the voice information. Accordingly, the electronic device and the method according to an embodiment of the present disclosure may provide a real time service utilizing obtained voice information.

An electronic device and a method optimized for each electronic device for generating an avatar based on real time voice information according to an embodiment of the present disclosure are provided. The electronic device and the method according to an embodiment of the present disclosure may quickly and flexibly reduce lip sync even in an internal environment (or an on-device environment) of the electronic device. In other words, the electronic device and the method according to an embodiment of the present disclosure may quickly generate an avatar (or a mouth shape of the avatar, or an animation including the avatar having the mouth shape) with higher accuracy by monitoring resources in the electronic device and using them efficiently. Accordingly, the electronic device and the method according to an embodiment of the present disclosure may provide a more immersive user experience to the user. In addition, the electronic device and the method according to an embodiment of the present disclosure may secure real time performance even in a multi-tasking environment via an optimized computation to generate the avatar having the mouth shape based on voice during runtime of the electronic device. In addition, the electronic device and method according to an embodiment of the present disclosure may reduce overall resource usage by utilizing only resources of the electronic device itself (on-device) and not using resources of a server providing a virtual environment and additional resources (e.g., data) for connection with the server.

As described above, an electronic device 101 may include a display 510. The electronic device 101 may include at least one processor 120. The at least one processor 120 may be configured to identify, with respect to feature value identification of voice data, first processing speed of each of a plurality of processing circuits for processing the voice data. The at least one processor 120 may be configured to identify, with respect to mouth shape identification of the voice data in conjunction with the feature value, second processing speed of each of the plurality of processing circuits. The at least one processor 120 may be configured to obtain, in a state of displaying an avatar, voice information from outside the electronic device 101. The at least one processor 120 may be configured to obtain, using a first processing circuit identified based on the first processing speed from among the plurality of processing circuits, a plurality of feature values of the voice information. The at least one processor 120 may be configured to obtain, using a second processing circuit identified based on the second processing speed from among the plurality of processing circuits, information for generating a mouth shape, based on the plurality of feature values. The at least one processor 120 may be configured to display, via the display 510, the avatar including the mouth shape generated based on the information.

According to an embodiment, the plurality of processing circuits may include a central processing unit (CPU), a graphic processing unit (GPU), or a neural processing unit (NPU). The at least one processor 120 may include the CPU.

According to an embodiment, the at least one processor 120 may be configured to obtain information on the plurality of processing circuits. The information on the plurality of processing circuits may include at least one of information indicating whether the NPU or the GPU is included in the electronic device or information indicating a manufacturer of the CPU.

According to an embodiment, the at least one processor 120 may be configured to obtain, during runtime of an artificial intelligence model, based on a framework of the artificial intelligence model, the information.

According to an embodiment, the at least one processor 120 may be configured to identify, based on information indicating whether the NPU or the GPU is included in the electronic device, that the plurality of processing circuits include the NPU or the GPU. The first processing speed may include processing speed with respect to the feature value identification performed by the artificial intelligence model in the NPU, processing speed with respect to the feature value identification performed by the artificial intelligence model in the GPU, processing speed with respect to the feature value identification performed by the artificial intelligence model in the CPU, or processing speed with respect to the feature value identification performed using a mel frequency cepstral coefficient (MFCC) in the CPU.

According to an embodiment, the at least one processor 120 may be configured to identify, in response to identifying that the plurality of processing circuits include the NPU or the GPU, based on the first processing speed, the first processing circuit. The plurality of feature values may be obtained based on the artificial intelligence model or the MFCC.

According to an embodiment, the at least one processor 120 may be configured to identify, in response to identifying that the plurality of processing circuits do not include the NPU or the GPU, the first processing circuit, which is the CPU. The plurality of feature values may be obtained based on the MFCC.

According to an embodiment, the at least one processor 120 may be configured to identify the first processing speed of each of the plurality of processing circuits by performing the feature value identification based on reference data. The at least one processor 120 may be configured to identify the second processing speed of each of the plurality of processing circuits by performing the mouth shape identification based on the reference data.

According to an embodiment, the at least one processor 120 may be configured to generate, from the obtained voice information, a plurality of input signals. Each of the plurality of input signals may be formed with a specified time length. The specified time length may be identified based on a delay time between a timing when the voice information is obtained and a timing when the avatar is displayed.

According to an embodiment, the at least one processor 120 may be configured to identify, during the specified time length corresponding to a first input signal from among the plurality of input signals, whether the first input signal includes voice. The at least one processor 120 may be configured to obtain, in response to the first input signal including the voice, the plurality of feature values with respect to the first input signal. The at least one processor 120 may be configured to identify, in response to identifying that the first input signal does not include the voice, whether the plurality of input signals include a second input signal following the first input signal.

According to an embodiment, the at least one processor 120 may be configured to identify, in response to identifying that the first input signal includes the voice, whether a mouth of the avatar in the state is in a closed state. The at least one processor 120 may be configured to display, in response to identifying that the mouth is in a closed state, via the display 510, in the state, the avatar including a mouth shape specified based on volume of the voice of the first input signal.

According to an embodiment, the at least one processor 120 may be configured to, after displaying, in response to identifying that the first input signal is a last input signal, the avatar including a mouth shape with respect to the first input signal, display the avatar including a mouth shape representing a mouth in a closed state.

According to an embodiment, the at least one processor 120 may be configured to obtain, in response to identifying that the plurality of input signals include the second input signal, processing speed of at least one processing circuit used for obtaining the mouth shape with respect to the first input signal. The at least one processor 120 may be configured to identify, based on the processing speed of the at least one processing circuit, the first processing speed and the second processing speed for the second input signal.

According to an embodiment, the at least one processor 120 may be configured to identify a first input signal, a second input signal following the first input signal, and a third input signal following the second input signal from among the plurality of input signals. The at least one processor 120 may be configured to perform the mouth shape identification with respect to a first part of the first input signal and a second part of the first input signal from a timing when a third part of the second input signal starts to be obtained. The at least one processor 120 may be configured to perform the mouth shape identification with respect to the second part of the first input signal and the third part of the second input signal from a time when a fourth part of the second input signal starts to be obtained. The at least one processor 120 may be configured to display, in response to completion of the mouth shape identification with respect to the first part and the second part, via the display 510, the avatar including a mouth shape with respect to the second part. The at least one processor 120 may be configured to display, in response to completion of the mouth shape identification with respect to the second part and the third part, via the display 510, the avatar including a mouth shape with respect to the third part, continuous to the avatar including a mouth shape with respect to the second part. The second part may be a time following the first part of a specified time interval of the first input signal. The fourth part may be a time following the third part of a specified time interval of the second input signal.

According to an embodiment, the at least one processor 120 may be configured to identify, with respect to voice enhancement of the voice data, third processing speed of each of the plurality of processing circuits. The at least one processor 120 may be configured to perform noise removal of the voice information. The at least one processor 120 may be configured to perform, using a third processing circuit identified based on the third processing speed from among the plurality of processing circuits, enhancement of a voice part of the voice information with noise removal performed. The at least one processor 120 may be configured to adjust volume of the voice information including the enhanced voice part. The plurality of feature values may be obtained with respect to the voice information with the adjusted volume.

According to an embodiment, the at least one processor 120 may be configured to identify a mapping value with respect to a visual phoneme identified based on the plurality of feature values. The at least one processor 120 may be configured to identify information for generating the mouth shape based on a weight value identified based on the mapping value. The information for generating the mouth shape identified based on the weight value may include a face mesh.

According to an embodiment, the at least one processor 120 may be configured to identify a face landmark identified based on the plurality of feature values. The at least one processor 120 may be configured to identify information for generating the mouth shape based on the face landmark. The face landmark may include three-dimensional coordinate information or two-dimensional coordinate information. The information for generating the mouth shape identified based on the face landmark may include a face mesh.

According to an embodiment, the at least one processor 120 may be configured to identify information for generating the mouth shape based on a weight value identified based on the plurality of feature values. The information for generating the mouth shape identified based on the weight value may include a face mesh.

According to an embodiment, the at least one processor 120 may be configured to identify frames for playing an animation including the avatar. The at least one processor 120 may be configured to display the animation via the display 510. The mouth shape of the avatar may be obtained with respect to each of the frames, or obtained with respect to frames corresponding to a specified period among the frames.

As described above, a method executed by an electronic device 101 may include identifying, with respect to feature value identification of voice data, first processing speed of each of a plurality of processing circuits for processing the voice data. The method may include identifying, with respect to mouth shape identification of the voice data in conjunction with the feature value, second processing speed of each of the plurality of processing circuits. The method may include obtaining, in a state of displaying an avatar, voice information from outside the electronic device 101. The method may include obtaining, using a first processing circuit identified based on the first processing speed from among the plurality of processing circuits, a plurality of feature values of the voice information. The method may include obtaining, using a second processing circuit identified based on the second processing speed from among the plurality of processing circuits, information for generating a mouth shape, based on the plurality of feature values. The method may include displaying, via a display 510, the avatar including the mouth shape generated based on the information.

As described above, a non-transitory computer readable storage medium may store one or more programs including instructions which, when executed by at least one processor 120 of an electronic device 101 with a display 510, cause the electronic device to identify, with respect to feature value identification of voice data, first processing speed of each of a plurality of processing circuits for processing the voice data. The non-transitory computer readable storage medium may store the one or more programs including the instructions which, when executed by the at least one processor 120, cause the electronic device to identify, with respect to mouth shape identification of the voice data in conjunction with the feature value, second processing speed of each of the plurality of processing circuits. The non-transitory computer readable storage medium may store the one or more programs including the instructions which, when executed by the at least one processor 120, cause the electronic device to obtain, in a state of displaying an avatar, voice information from outside the electronic device 101. The non-transitory computer readable storage medium may store the one or more programs including the instructions which, when executed by the at least one processor 120, cause the electronic device to obtain, using a first processing circuit identified based on the first processing speed from among the plurality of processing circuits, a plurality of feature values of the voice information. The non-transitory computer readable storage medium may store the one or more programs including the instructions which, when executed by the at least one processor 120, cause the electronic device to obtain, using a second processing circuit identified based on the second processing speed from among the plurality of processing circuits, information for generating a mouth shape, based on the plurality of feature values. The non-transitory computer readable storage medium may store the one or more programs including the instructions which, when executed by the at least one processor 120, cause the electronic device to display, via the display 510, the avatar including the mouth shape generated based on the information.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a display (510);
at least one processor (120) comprising processing circuitry; and
memory (130) comprising one or more storage media storing instructions, wherein the instructions, when executed by the at least one processor individually or collectively, cause the electronic device (101) to:
identify, with respect to feature value identification of voice data, first processing speed of each of a plurality of processing circuits for processing the voice data;
identify, with respect to mouth shape identification of the voice data in conjunction with the feature value, second processing speed of each of the plurality of processing circuits;
obtain, in a state of displaying an avatar, voice information from outside the electronic device (101);
obtain, using a first processing circuit identified based on the first processing speed from among the plurality of processing circuits, a plurality of feature values of the voice information;
obtain, using a second processing circuit identified based on the second processing speed from among the plurality of processing circuits, information for generating a mouth shape, based on the plurality of feature values; and
display, via the display (510), the avatar including the mouth shape generated based on the information.

2. The electronic device (101) of claim 1, wherein the plurality of processing circuits include a central processing unit (CPU), a graphic processing unit (GPU), or a neural processing unit (NPU), and
wherein the at least one processor (120) includes the CPU.

3. The electronic device (101) of claim 2, wherein the instructions, when executed by the at least one processor (120) individually or collectively, cause the electronic device (101) to:
obtain information on the plurality of processing circuits, wherein the information on the plurality of processing circuits includes at least one of information indicating whether the NPU or the GPU is included in the electronic device (101) or information indicating a manufacturer of the CPU.

4. The electronic device (101) of claim 3, wherein the instructions, when executed by the at least one processor (120) individually or collectively, cause the electronic device (101) to:
obtain, during runtime of an artificial intelligence model, based on a framework of the artificial intelligence model, the information.

5. The electronic device (101) of claim 2, wherein the instructions, when executed by the at least one processor (120) individually or collectively, cause the electronic device (101) to:
identify, based on information indicating whether the NPU or the GPU is included in the electronic device (101), that the plurality of processing circuits include the NPU or the GPU, and
wherein the first processing speed includes processing speed with respect to the feature value identification performed by the artificial intelligence model in the NPU, processing speed with respect to the feature value identification performed by the artificial intelligence model in the GPU, processing speed with respect to the feature value identification performed by the artificial intelligence model in the CPU, or processing speed with respect to the feature value identification performed using a mel frequency cepstral coefficient (MFCC) in the CPU.

6. The electronic device (101) of claim 5, wherein the instructions, when executed by the at least one processor (120) individually or collectively, cause the electronic device (101) to:
identify, in response to identifying that the plurality of processing circuits include the NPU or the GPU, based on the first processing speed, the first processing circuit, and
wherein the plurality of feature values are obtained based on the artificial intelligence model or the MFCC.

7. The electronic device (101) of claim 1, wherein the instructions, when executed by the at least one processor (120) individually or collectively, cause the electronic device (101) to:
identify the first processing speed of each of the plurality of processing circuits by performing the feature value identification based on reference data; and
identify the second processing speed of each of the plurality of processing circuits by performing the mouth shape identification based on the reference data.

8. The electronic device (101) of claim 1 wherein the instructions, when executed by the at least one processor (120) individually or collectively, cause the electronic device (101) to:
generate, from the obtained voice information, a plurality of input signals,
wherein each of the plurality of input signals is formed with a specified time length, and
wherein the specified time length is identified based on a delay time between a timing when the voice information is obtained and a timing when the avatar is displayed.

9. The electronic device (101) of claim 8, wherein the instructions, when executed by the at least one processor (120) individually or collectively, cause the electronic device (101) to:
identify, during the specified time length corresponding to a first input signal from among the plurality of input signals, whether the first input signal includes voice;
obtain, in response to the first input signal including the voice, the plurality of feature values with respect to the first input signal; and
identify, in response to identifying that the first input signal does not include the voice, whether the plurality of input signals include a second input signal following the first input signal.

10. The electronic device (101) of claim 9, wherein the instructions, when executed by the at least one processor (120) individually or collectively, cause the electronic device (101) to:
identify, in response to identifying that the first input signal includes the voice, whether a mouth of the avatar in the state is in a closed state; and
display, in response to identifying that the mouth is in a closed state, via the display (510), in the state, the avatar including a mouth shape specified based on volume of the voice of the first input signal.

11. The electronic device (101) of claim 9, wherein the instructions, when executed by the at least one processor (120) individually or collectively, cause the electronic device (101) to:
after displaying, in response to identifying that the first input signal is a last input signal, the avatar including a mouth shape with respect to the first input signal, display the avatar including a mouth shape representing a mouth in a closed state.

12. The electronic device (101) of claim 11, wherein the instructions, when executed by the at least one processor (120) individually or collectively, cause the electronic device (101) to:
obtain, in response to identifying that the plurality of input signals include the second input signal, processing speed of at least one processing circuit used for obtaining the mouth shape with respect to the first input signal; and
identify, based on the processing speed of the at least one processing circuit, the first processing speed and the second processing speed for the second input signal.

13. The electronic device (101) of claim 1, wherein the instructions, when executed by the at least one processor (120) individually or collectively, cause the electronic device (101) to:
identify, with respect to voice enhancement of the voice data, third processing speed of each of the plurality of processing circuits;
perform noise removal of the voice information;
perform, using a third processing circuit identified based on the third processing speed from among the plurality of processing circuits, enhancement of a voice part of the voice information with noise removal performed; and
adjust volume of the voice information including the enhanced voice part, and
wherein the plurality of feature values are obtained with respect to the voice information with the adjusted volume.

14. A method executed by an electronic device (101), comprising:
identifying, with respect to feature value identification of voice data, first processing speed of each of a plurality of processing circuits for processing the voice data;
identifying, with respect to mouth shape identification of the voice data in conjunction with the feature value, second processing speed of each of the plurality of processing circuits;
obtaining, in a state of displaying an avatar, voice information from outside the electronic device (101);
obtaining, using a first processing circuit identified based on the first processing speed from among the plurality of processing circuits, a plurality of feature values of the voice information;
obtaining, using a second processing circuit identified based on the second processing speed from among the plurality of processing circuits, information for generating a mouth shape, based on the plurality of feature values; and
displaying, via a display of the electronic device (101), the avatar including the mouth shape generated based on the information.

15. A non-transitory computer readable storage medium storing one or more programs, wherein the one or more programs include instructions which, when executed by at least one processor (120) of an electronic device (101) with a display individually or collectively, cause the electronic device (101) to:
identify, with respect to feature value identification of voice data, first processing speed of each of a plurality of processing circuits for processing the voice data;
identify, with respect to mouth shape identification of the voice data in conjunction with the feature value, second processing speed of each of the plurality of processing circuits;
obtain, in a state of displaying an avatar, voice information from outside the electronic device (101);
obtain, using a first processing circuit identified based on the first processing speed from among the plurality of processing circuits, a plurality of feature values of the voice information;
obtain, using a second processing circuit identified based on the second processing speed from among the plurality of processing circuits, information for generating a mouth shape, based on the plurality of feature values; and
display, via the display (510), the avatar including the mouth shape generated based on the information.
